(19) **Europäisches Patentamt**

**European Patent Office**

**Office européen des brevets**

(11) **EP 0 823 049 B1**

(12) **EUROPÄISCHE PATENTSCHRIFT**

(45) Veröffentlichungstag und Bekanntmachung des Hinweises auf die Patenterteilung:
**24.10.2001 Patentblatt 2001/43**

(21) Anmeldenummer: **96914133.2**

(22) Anmeldetag: **26.04.1996**

(51) Int Cl.⁷: $G01N\ 27/26$, $G01N\ 27/49$

(86) Internationale Anmeldenummer:
**PCT/EP96/01752**

(87) Internationale Veröffentlichungsnummer:
**WO 96/34275 (31.10.1996 Gazette 1996/48)**

(54) **VERFAHREN UND VORRICHTUNG ZUM FORTLAUFENDEN NACHWEIS WENIGSTENS EINER SUBSTANZ IN EINEM GASFÖRMIGEN ODER FLÜSSIGEN GEMISCH MITTELS EINER SENSORELEKTRODE**

PROCESS AND DEVICE FOR CONTINUOUSLY DETECTING AT LEAST ONE SUBSTANCE IN A GASEOUS OR LIQUID MIXTURE BY MEANS OF A SENSOR ELECTRODE

PROCEDE ET DISPOSITIF DE DETECTION EN CONTINU D'AU MOINS UNE SUBSTANCE DANS UN MELANGE GAZEUX OU LIQUIDE AU MOYEN D'UN ELECTRODE DE DETECTION

(84) Benannte Vertragsstaaten:
**AT BE CH DE DK ES FI FR GB GR IE IT LI LU MC NL PT SE**

(30) Priorität: **27.04.1995 DE 19515524**

(43) Veröffentlichungstag der Anmeldung:
**11.02.1998 Patentblatt 1998/07**

(73) Patentinhaber: **PRIVATE UNIVERSITÄT WITTEN/HERDECKE GMBH**
**58448 Witten (DE)**

(72) Erfinder: **BALTRUSCHAT, Helmut**
**D-53127 Bonn (DE)**

(74) Vertreter:
**von Samson-Himmelstjerna, Friedrich R., Dipl.-Phys.**
**SAMSON & PARTNER**
**Widenmayerstrasse 5**
**80538 München (DE)**

(56) Entgegenhaltungen:
**WO-A-91/17433     WO-A-94/15210**
**GB-A- 2 280 034**

## Beschreibung

Die Erfindung bezieht sich auf ein Verfahren und eine Vorrichtung zum fortlaufenden Nachweis wenigstens einer Substanz in einem gasförmigen oder flüssigen Gemisch mittels einer Sensorelektrode, an die ein veränderliches Potential angelegt wird.

Der Bedarf an einer problemlosen, schnellen und kostengünstigen Nachweismethode von Substanzen, insbesondere Schadstoffen, ist nicht zuletzt aufgrund gesteigerter Bedürfnisse des Umweltschutzes angewachsen. Zur Einhaltung von Schadstoffgrenzwerten (z.B. bei der Emissionskontrolle und Emissionsminderung) ist es erforderlich, Schadstoffkonzentrationen in gasförmigen oder flüssigen Medien sicher und kontinuierlich detektieren zu können, etwa durch den Einsatz elektrochemischer Sensoren. Auch in der Prozeßüberwachung kann die Kontrolle der Konzentrationen von Produkten, Edukten und von Beimengungen für eine optimale Prozeßführung notwendig sein. Ein schneller Nachweis wird allerdings dadurch erschwert, daß die Stoffe bzw. Substanzen häufig reaktionsträge sind.

Der elektrochemische Nachweis basiert häufig auf dem amperometrischen Prinzip und zielt auf einen quantitativen Nachweis einer stofflichen Komponente ab. Dazu werden Substanzen ($Cl_2$, HCL, $SO_2$, $NO_x$, $H_2CO$ u.a.) elektrochemisch, d.h. durch eine Oxidation oder Reduktion, an einer Sensorelektrode umgesetzt, an der ein konstantes Potential anliegt.

Der dabei fließende Strom kann in Beziehung zur Konzentration der nachzuweisenden Substanz gesetzt werden. Die Selektivität einer mit diesem Wirkprinzip arbeitenden Sensorelektrode ist durch das verwendete Elektrodenmaterial und durch das an der Elektrode anlegbare Potential eingeschränkt. Das anlegbare Potential ist auf einen Wertebereich beschränkt, bei dem der Luftsauerstoff nicht reduziert bzw. der Elektrolyt für die nachzuweisende Substanz nicht zersetzt wird. Die durch diese störenden Effekte verursachten Ströme überdecken nämlich das eigentliche Meßsignal fast vollständig. Einige Substanzen sind außerdem in dem zur Verfügung stehenden Potentialbereich nicht reaktiv genug oder vergiften die Sensorelektrode durch Adsorption, so daß ihr Nachweis mit dieser Methode nicht gelingt. Zu diesen Substanzen zählen viele ungesättigte Verbindungen, halogenierte Kohlenwasserstoffe und Aromate.

Ein qualitativer und quantitativer elektrochemischer Nachweis kann mittels voltammetrischer Techniken erfolgen. Hierbei wird die nachzuweisende Substanz an der Elektrode nicht bei einem festen Potential umgesetzt. Vielmehr wird eine Oxidation bzw. Reduktion der Substanz während eines sich kontinuierlich verändernden Potentials sukzessive katalysiert. Die dabei aufgezeichnete Beziehung zwischen fließender Ladungsmenge bzw. Strom und angelegtem Potential kann einerseits zur Quantität und andererseits zur Qualität der zu detektierenden Substanz korreliert werden.

Bei einem weiteren, als Wechselstromverfahren bezeichneten elektrochemischen Nachweisverfahren überlagert man eine Wechselspannung dem an einer Elektrode anliegenden Potential. Der dabei fließende Wechselstrom wird gemessen. Der gemessene Wechselstrom ist zur angelegten Wechselspannung phasenverschoben, und zwar aufgrund der Elektrodenkapazität, die durch Adsorption der nachzuweisenden Substanz verändert wird, und auch aufgrund von Reduktions- und Oxidationsvorgängen. Man definiert daher einen komplexen Widerstand - im folgenden als Impedanz bezeichnet -, welcher die Vorgänge an der Elektrodenoberfläche geeignet beschreibt. Sein frequenz- und potentialabhängiger Real- und Imaginärteil geben Auskunft über die Konzentration der nachzuweisenden Substanz.

Ein dem Wechselstromverfahren ähnliches Nachweisverfahren ist die aus der Analytik für Lösungen bekannte Tensametrie (siehe z.B. Nürnberg et al., in Methodicum Chimicum, Bd 1/1, Stuttgart 1973). Bei derartigen Verfahren muß die Probe mit der nachzuweisenden Substanz aber immer mehr oder weniger manuell "aufbereitet", d.h. von störenden Beimengungen befreit, und der Luftsauerstoff ausgeschlossen werden. Damit kann mit diesen beiden bekannten Verfahren-Wechselstromverfahren und Tensametrie - kein kontinuierlicher Nachweis erfolgen.

Bekannt ist in diesem Zusammenhang auch die Bestimmung der Konzentration von Glucose in Blut (Kasapbasioglu et. al., Sensors and Actuators B, 13-14(1993), S.749). Hierbei wird Glucose an einer membranbedeckten Elektrode aus Edelmetall direkt elektrochemisch zu Gluconsäure oxidiert. Die Elektrode fungiert dabei als Elektrokatalysator, an dem ein treppenartig ab- und zunehmendes Potentialprogramm angelegt wird. Auf jeder Stufe wird das Potential von je einer Wechselspannung mit einer hohen und einer niedrigen Frequenz überlagert. Die Glucosekonzentration im Blut wird aus den resultierenden Real- und Imaginärteilen der Impedanz bei bestimmten Potentialstufen bestimmt.

Es ist weiterhin bekannt, die Selektivität und die Sensibilität einer Elektrode bei einem elektrochemischen Nachweisverfahren dadurch zu erhöhen, daß die Ad- bzw. Absorption der zu detektierenden Substanz an der Elektrodenoberfläche ausgenutzt wird. Die Ad- bzw. Absorption kann über das angelegte Potential bzw. Potentialprogramm unterstützt, geschwächt oder aufgehoben werden. Die zu detektierende Substanz wird bei einem Potential adsorbiert, bei dem die Substanz elektrochemisch nicht aktiv ist. Die zeitliche Adsorptionsmenge korreliert dabei mit der Konzentration der zu detektierenden Substanz.

Aus der Fachzeitschrift "Sensors and Actuators B", Ege et al., 4(1991) S. 519, ist es bekannt, mit dem amperometrischen Prinzip das reaktive Kohlenmonoxid CO in einer $CO/H_2$-Mischung quantitativ nachzuweisen. Für den Nachweis wird die Kohlenmonoxid-Komponente an einer Elektrode aus Platin erst adsorbiert und anschließend elektrochemisch umgesetzt. Das Kohlenmonoxid wird spezifisch bei einem Potential adsorbiert, bei dem es elektrochemisch nicht aktiv ist bzw. nicht umgesetzt wird. Nach der Adsorption des Kohlenmonoxids bis zum Sättigungswert wird das Potential auf einen Wert angehoben, bei dem das Kohlenmonoxid oxidiert wird. Die während der Oxidation fließende Ladungsmenge wird gemessen und über die Oxidationszeit integriert. Das so erhaltene Meßsignal korreliert mit der Konzentration des Kohlenmonoxids. Die fließende Ladungsmenge wird allerdings von zusätzlich fließenden Ladungsmengen überlagert, welche von der elektrochemischen Umsetzung von zusätzlich adsorbierten Substanzen wie Sauerstoff stammen. Diese zusätzlich fließenden Ladungsmengen werden in einem weiteren Referenzzyklus ermittelt, um das Meßsignal zu korrigieren. In diesem Referenzzyklus wird für eine sehr kurze Zeitspanne ein Potential zur Adsorption der zusätzlich adsorbierten Substanzen angelegt. Die Zeitspanne ist dabei so kurz bemessen, daß das Kohlenmonoxid nicht an der Elektrodenoberfläche des Sensors adsorbiert wird. Anschließend wird das Potential auf ein zur elektrochemischen Umsetzung dieser zusätzlich adsorbierten Substanzen geeignetes Potential gebracht. Die bei dieser elektrochemischen Umsetzung fließende Ladungsmenge wird als Korrekturwert verwendet, da sie alleinig von den zusätzlich adsorbierten Substanzen beeinflußt wird. Es können aus dem $CO/H_2$-Gemisch minimale CO-Konzentrationen bis zu 0,05% CO detektiert werden. Auch bei diesem bekannten Verfahren erfolgt allerdings kein fortlaufender Nachweis. Außerdem existiert kein geeigneter Sensor zur kommerziellen Nutzung dieses Nachweisverfahrens.

Auf vergleichbare Weise wird auch das reaktive Kohlendioxid $CO_2$ in Konzentrationen von 5% bis 0,3% $CO_2$ in Luft quantitativ nachgewiesen (Küver et. al.; J. Electroanal. Chem., 353(1993), S. 255).

Es ist ebenfalls bekannt, mehrere Substanzen gleichzeitig mittels einer Kette von Elektroden, die meist aus unterschiedlichen Elektrodenmaterialien bestehen, quantitativ nachzuweisen. An den einzelnen Elektroden liegen dabei verschiedene Potentiale an, an denen je eine Substanz elektrochemisch umgesetzt wird. Die an den einzelnen Elektroden erhaltenen Meßsignale werden mit Hilfe einer Mustererkennungstechnik mit den einzelnen Substanzkonzentrationen korreliert.

GB2280034 offenbart eine Lambdasonde bestehend aus einem Kondensator mit einer Gold und einer Platinelektrode. Adsorbierter Sauerstoff ändert die Austrittsarbeit der Platinelektrode, nicht aber der Goldelektrode. Ändert sich der Lambdawert und damit die Menge adsorbierten Sauerstoffs, so fliesst zwischen den Elektroden Strom. Das Integral dieses Stroms stellt ein Mass für den Lambdawert dar.

Die oben erwähnten elektrochemischen Nachweisverfahren eignen sich nicht für einen schnellen, kontinuierlichen sowohl qualitativen als auch quantitativen Nachweis oder sind sehr aufwendig. Außerdem können mit diesen bekannten Nachweisverfahren schwach reaktive Substanzen nicht oder nur in hohen Konzentrationen detektiert werden.

Allgemein zeichnen sich bekannte elektrochemische Nachweisverfahren durch eine häufig zu geringe Selektivität aus. Ebenso erfüllen die meisten auf diesen Nachweisverfahren basierenden Sensoren nicht die allgemein zugrundegelegten Kriterien eines Sensors: Der Nachweis sollte schnell und kontinuierlich ohne eine Aufbereitung der Probe "vor Ort" erfolgen mit einer Zeitkonstante in der Größenordnung von einer oder höchstens einigen Minuten. Außerdem sollte der Sensor in Umgebungsatmosphäre, d.h. im allgemeinen in Gegenwart von Luftsauerstoff arbeiten und zudem noch kostengünstig sein.

Ziel der Erfindung ist es, ein weiteres Verfahren und eine weitere Vorrichtung für einen fortlaufenden sowohl quantitativen als auch qualitativen Nachweis von Substanzen in gasförmigen oder flüssigen Gemischen bereitzustellen.

Die Erfindung erreicht dieses Ziel durch die Gegenstände der Ansprüche 1 und 13.

Das erfindungsgemäße Nachweisverfahren nach Anspruch 1 wird im folgenden als modifiziertes Wechselstromverfahren bezeichnet. Hierbei wird das angelegte Potential so ausgewählt, daß die Substanz ohne elektrochemische Umsetzung an der Elektrodenoberfläche des Sensors angereichert wird. Die Ionen des Elektrolyten bilden eine Doppelschicht vor der Sensorelektrode aus. Diese Doppelschicht wirkt zusammen mit der Elektrodenoberfläche des Sensors als eine Art Plattenkondensator. Das Maß der Anreicherung der Substanz verändert die Kapazität dieses Plattenkondensators bzw. der Sensorelektrode dadurch, daß das Adsorbat einen Teil der Elektrodenfläche blockiert. Die Kapazität der Sensorelektrode kann über ein geeignetes elektronisches Meßverfahren verfolgt und mit der Konzentration der Substanz korreliert werden. Dieses modifizierte Wechselstrom verfahren zeichnet sich durch eine hohe Empfindlichkeit gegenüber Änderungen in der Struktur der Doppelschicht aus. Somit ist es besonders geeignet, geringe Konzentrationen grenzflächenaktiver Substanzen, insbesondere halogenierter Kohlenwasserstoffe und leichtflüchtiger organischer Lösungsmittel, einfach qualitativ und quantitativ nachzuweisen.

Es konnte erstmalig gezeigt werden, daß die nachzuweisende Substanz trotz gleichzeitiger Reduktion des Luftsauerstoffs (selbst wenn die Konzentration des Luftsauerstoffs $10^5$- bis $10^6$-mal - oder um einen noch größeren Faktor - größer ist als die Konzentration der nachzuweisenden Substanz) adsorbiert und dabei die Elektrodenkapazität - und damit auch die Konzentration der nachzuweisenden Substanz - bei der gleichzeitig ablaufenden Sauerstoffreduktion bestimmbar ist.

Die Anreicherung einer oder mehrerer in einer Mischung vorhandener Substanzen kann unter anderem über die Adsorptionszeit und das angelegte Adsorptionspotential beeinflußt werden. Die Adsorptionszeit einer Substanz

3

hängt von den unterschiedlichen thermodynamischen und kinetischen Eigenschaften der verschiedenen Substanzen in der Mischung ab. Über geeignete Wahl des angelegten Adsorptionspotentials und weiterer Parameter (s.u.) kann eine Substanz in der Mischung dabei selektiv nachgewiesen werden.

Mit dem modifizierten Nachweisverfahren werden die oben beschriebenen Nachteile bekannter Nachweisverfahren vermieden. Es ist universell anwendbar, insbesondere auch für wenig reaktive Substanzen.

Erfindungsgemäß wird die Elektrodenkapazität der Sensorelektrode durch eine Impedanzmessung bestimmt. Hierzu wird bevorzugt eine Gleichspannung mit einer überlagerten niederfrequenten Wechselspannung an die Sensorelektrode angelegt. Die Impedanz der Sensorelektrode bzw. der Doppelschicht wird dann über die Phasenverschiebung und die Amplitudenveränderung des aufgrund der angelegten niederfrequenten Wechselspannung fließenden Wechselstroms bestimmt. Bevorzugt wird die Frequenz der niederfrequenten Wechselspannung in Bezug auf die Impedanzmessung optimiert.

In einem bevorzugten Nachweisverfahren wird die Konzentration der Substanz aus der Differenz der Elektrodenkapazität der Sensorelektrode ohne und mit einer Anreicherung der Substanz an der Elektrodenoberfläche bestimmt. Hierzu wird bevorzugt in einem ersten Schritt eine von einer Wechselspannung überlagerte Gleichspannung als Potential an die Sensorelektrode angelegt. Das Potential wird so ausgewählt, daß die Substanz elektrochemisch umgesetzt und demnach nicht angereichert wird. In diesem ersten Schritt wird die Elektrodenoberfläche somit aktiviert. Anschließend wird die Elektrodenkapazität bei aktivierter bzw. freier Elektrodenoberfläche gemessen. In einem zweiten Schritt wird das Potential bevorzugt auf einen Wert gebracht, bei dem sich die nachzuweisende Substanz an der Elektrodenoberfläche des Sensors anreichert, und dort im wesentlichen nicht umgesetzt wird. Es wird dann die Elektrodenkapazität mit belegter Elektrodenoberfläche gemessen. Der Konzentrationswert der nachzuweisenden Substanz berechnet sich dann aus der Differenz der in den beiden Schritten gemessenen Elektrodenkapazitäten.

In einem besonders bevorzugten Nachweisverfahren wird die Konzentration der Substanz aus der zeitlichen Änderung der Elektrodenkapazität der Sensorelektrode bestimmt. Die zeitliche Änderung der Elektrodenkapazität kann hierbei quasi differentiell - indem zu zeitlich nah aufeinanderfolgenden Zeitpunkten während der Anreicherungsphase gemessen wird - oder im Mittel - indem zu Beginn und zum Ende der Anreicherungsphase gemessen wird - gemessen werden. Sie ist proportional zur zeitlichen Änderung des Imaginärteils des Wechselstroms, welcher durch die angelegte niederfrequente Wechselspannung bedingt ist. Dieser fließende Wechselstrom ist meßtechnisch einfach erfaßbar. Damit kann die zeitliche Entwicklung der Elektrodenkapazität und damit einhergehend die Substanzanreicherung an der Elektrodenoberfläche vorteilhaft quasi kontinuierlich verfolgt werden. Diese zeitliche Entwicklung wird anschließend über bekannte Zusammenhänge - z.B. eine Eichung, die einmal bei der Herstellung oder in größeren zeitlichen Abständen durchgeführt wird - mit der Substanzkonzentration korreliert.

Die Meßparameter dieses Nachweisverfahrens - z. B. Anreicherungszeit, Anreicherungspotential und Frequenz der angelegten Wechselspannung - stellen ausreichende Kombinationsmöglichkeiten zum genauen und einfachen, qualitativen und quantitativen Nachweis vorallem geringer Konzentrationen von Substanzen in einem gasförmigen oder flüssigen Gemisch bereit.

Bevorzugt wird zur Entfernung der an der Elektrodenoberfläche angereicherten Substanz das Potential auf ein für dessen elektrochemische Umsetzung und/oder Desorption charakteristisches Potential gebracht. Für den fortlaufenden Nachweis ist es erforderlich, die Elektrodenoberfläche des eingesetzten Sensors von Zeit zu Zeit vollständig von der angereicherten Substanz zu befreien. Dies kann mit Hilfe von sogenannten Oxidationszyklen erfolgen. Dabei wird die Elektrodenoberfläche über eine entsprechende Wahl des angelegten Potentials gereinigt und aktiviert, indem die angereicherte Substanz zuerst elektrochemisch umgesetzt und/oder desorbiert oder durch adsorbierenden Sauerstoff verdrängt wird. Anschließend werden die umgesetzte Substanz oder der adsorbierte Sauerstoff beispielsweise durch Vermindern des Potentials oder auch durch andere Methoden vollständig desorbiert.

Weiterhin wird die Anreicherung bevorzugt beendet, wenn die gemessene Elektrodenkapazität oder die zeitliche Änderung der Elektrodenkapazität der Sensorelektrode einen vorgegebenen Wert erreicht. Vorteilhaft wird dabei die Belegung der Elektrodenoberfläche mit der anzureichernden Substanz verfolgt. Über den vorgegebenen Wert kann das Verhältnis der Ansprechzeit zur Empfindlichkeit des Sensors variabel gestaltet werden. Die Ansprechzeit richtet sich automatisch nach der Zeit, in der eine für das auszuwertende Meßsignal ausreichende Menge nachzuweisender Substanz an der Elektrodenoberfläche angereichert ist. Mit dem vorgegebenen Wert detektiert der Sensor somit bei maximaler Sensorempfindlichkeit und minimaler Ansprechzeit. Die Reaktivität und die Sensibilität des Sensors läßt sich somit vorteilhaft besonders einfach optimieren.

Bevorzugt wird der so erhaltene Meßwert auf einen weiteren, ggf. über wenigstens eine weitere Messung der Elektrodenkapazität der Sensorelektrode ermittelten Meßwert normiert, bei welchem im wesentlichen nicht die nachzuweisende Substanz, sondern nur der Sauerstoff bzw. Wasserstoff an der Sensorelektrode angereichert wird. Für diese Normierung kann der weitere Meßwert also entweder ein in einer getrennten Messung aufgenommer Meßwert oder - bei Messung der zeitlichen Änderung der Elektrodenkapazität im Mittel - der bereits zu Beginn der Anreicherungsphase aufgenomme Meßwert sein. Mit dieser Normierung werden Veränderungen, Alterungs- oder Abnutzungserscheinungen der Elektrodenoberfläche vorteilhafterweise berücksichtigt und das Meßsignal entsprechend korrigiert.

Die Normierung basiert darauf, daß die reine Sauerstoffadsorption bzw. Wasserstoffadsorption in gleichem Maße wie die Anreicherung der nachzuweisenden Substanz an der Sensorelektrode von der Qualität der Sensorelektrodenoberfläche beeinträchtigt wird. Bevorzugt kann der Meßwert auch mittels der Elektrodenkapazität normiert werden.

Nach Anspruch 9 ist zusätzlich ein Verfahren zum fortlaufenden Nachweis einer Substanz in einem flüssigen Gemisch mittels der Sensorelektrode vorgesehen, an der nach der Anreicherung das Potential auf ein für die elektrochemische Umsetzung' der Substanz charakteristisches Potential gebracht, der dabei entstehende Strom gemessen, und der so erhaltene Meßwert mit der Substanz korreliert wird. Nach Anspruch 14 ist eine zum Durchführen des Verfahrens nach Anspruch 9 geeignete Vorrichtung mit Mitteln vorgesehen, welche die einzelnen im Anspruch 9 aufgezählten Verfahrensschritte ausführen.

Das Nachweisverfahren nach Anspruch 9 wird nachfolgend als Flüssigphase-Potentialverfahren bezeichnet. Mit diesem Flüssigphase-Potentialverfahren wird wenigstens eine Substanz in einer flüssigen Phase nachgewiesen. Es nutzt ähnlich dem modifizierten Wechselstromverfahren ebenfalls die Anreicherung der nachzuweisenden Substanz an einer Elektrodenoberfläche aus, an welcher ein entsprechendes Potential anliegt. Nach der Anreicherung wird die angereicherte Substanz bei dem für die elektrochemische Umsetzung charakteristischen Potential bevorzugt oxidiert bzw. reduziert. Der aus der elektrochemischen Umsetzung resultierende Strom wird dann mit der angereicherten Substanz und letztendlich mit der Substanzkonzentration in der zu untersuchenden flüssigen Phase bzw. Lösung korreliert. Mittels der Anreicherung wird die lokale Substanzkonzentration vor der Sensorelektrode stark erhöht, so daß der in der anschließenden elektrochemischen Umsetzung fließende Strom ein größeres Meßsignal liefert. Ein dieses Flüssigphase-Potentialverfahren anwendender Sensor weist somit vorteilhaft auch wenig reaktive Substanzen nach, da dieser Sensor insgesamt empfindlicher als bekannte Sensoren ist. Dieser Sensor kann weiterhin über die Paramter - Anreicherungspotential und Anreicherungszeit - optimiert werden.

Nach Anspruch 10 ist das Verfahren zum fortlaufenden Nachweis wenigstens zweier Substanzen in einem gasförmigen oder flüssigen Gemisch weitergebildet, wobei wenigstens zwei Nachweiszyklen durchgeführt werden, und pro Nachweiszyklus wenigstens eine Substanz an der Oberfläche der Sensorelektrode angereichert, danach das Potential auf ein für die elektrochemische Umsetzung wenigstens einer Substanz charakteristisches Potential gebracht und der dabei entstehende Strom gemessen wird, sowie anschließend die so erhaltenen Meßwerte mit den Substanzen korreliert werden.

Das Nachweisverfahren nach Anspruch 10 wird im folgenden als allgemeines Potentialverfahren bezeichnet. Es dient dem Nachweis wenigstens zweier Substanzen in einem gasförmigen oder flüssigen Gemisch. Hierzu durchläuft das an der Sensorelektrode anliegende Potential in jedem Nachweiszyklus ein bestimmtes Potentialprogramm.

Das Potentialprogramm kann dabei folgendermaßen aussehen: Zunächst wird ein Potential angelegt, bei dem sich wenigstens eine der Substanzen an der Elektrodenoberfläche anreichert, wobei die zur Anreicherung verfügbare Zeit bevorzugt variabel gestaltet wird. Danach wird das Potential auf einen Wert geändert, bei dem die wenigstens eine an der Sensorelektrode angereicherte Substanz elektrochemisch umgesetzt wird. Der dabei fließende Strom wird gemessen. Anschließend wird das Potential bevorzugt sprunghaft auf einen Wert eingestellt, bei dem wiederum eine Anreicherung wenigstens einer Substanz an der Elektrodenoberfläche des Sensors stattfindet. Für den Nachweis mehrerer Substanzen in einem Gemisch müssen für dieses spezielle Potentialprogramm anzahlsmäßig ebenso viele Anreicherungsschritte durchgeführt werden, wie unterschiedliche Substanzen nachgewiesen werden sollen. Nach jedem dieser Anreicherungsschritte wird die wenigstens eine Substanz elektrochemisch umgesetzt.

Beispielsweise wird beim Nachweis zweier Substanzen in einem Zweisubstanzengemisch im zweiten Anreicherungsschritt zusätzlich diejenige Substanz angereichert, die im ersten Anreicherungsschritt nicht angereichert wurde. Wenn sich im ersten Anreicherungsschritt beide Substanzen an der Elektrodenoberfläche des Sensors angereichert haben, so wird im zweiten Anreicherungsschritt ein Potential angelegt, bei dem sich nur eine der beiden Substanzen anreichert. Nach den jeweiligen Anreicherungsschritten wird ein Potential eingestellt, bei dem die angereicherte Substanz oder Substanzen elektrochemisch umgesetzt werden. Der dabei jeweils fließende Strom wird bestimmt.

Bei drei nachzuweisenden Substanzen kann beispielsweise folgendes Potentialprogramm ablaufen: Wenn in einem ersten Anreicherungsschritt die Substanzen 1, 2 und 3 angereichert werden und in einem zweiten Anreicherungsschritt die Substanzen 1 und 2, so darf bei diesem speziellen Potential-program in einem dritten Anreicherungsschritt entweder nur die Substanz 1 oder die Substanz 2 angereichert werden. Eine Anreicherung der Substanz 3 führt nicht zu einem entsprechend unabhängigen Nachweis aller drei Substanzen.

Das Potentialprogramm kann alternativ aber auch wie folgt aussehen: Zuerst wird ein Potential angelegt, bei dem sich nur eine oder mehrere Substanzen anreichern. Anschließend werden die einzelnen Substanzen nach nur einem Anreicherungsschritt (bei mehr als zwei nachzuweisenden Substanzen können auch mehrere Anreicherungsschritte erfolgen; es müssen hierzu allerdings nicht soviele Anreicherungsschritte erfolgen, wie nachzuweisende Substanzen in der Probe enthalten sind) bei für sie charakteristischen Potentialen umgesetzt bzw. oxidiert.

Aus den bei den verschiedenen elektrochemischen Umsetzungen fließenden Strömen werden die Konzentrationen der jeweiligen Substanzen ermittelt.

Mit diesem Potentialprogramm kann die Querempfindlichkeit eines Sensors vorteilhafterweise stark minimiert werden. Außerdem erfolgt der Nachweis mehrerer Substanzen nebeneinander vorteilhaft mit nur einer Sensorzelle, statt wie bekannt mit einer Sensorzelle pro nachzuweisender Substanz. Die Anreicherung bietet bei einem fortlaufenden Nachweis darüberhinaus den Vorteil, die Sensorselektivität über das Anreicherungspotential und die Anreicherungszeit entsprechend zu optimieren.

Beim erfindungsgemäßen Nachweisverfahren wird das sich verändernde Potential zyklisch verändert werden. Nach Ablauf eines Potentialprogramms mit Anreicherungen und eventuell sich anschließenden elektrochemischen Umsetzungen wird das Potential wieder auf den Wert zum Start desselben Potentialprogramms gebracht und steht somit für einen weiteren Nachweiszyklus zur Verfügung. Hiermit kann demnach die Konzentration der wenigstens einen nachzuweisenden Substanz quasi stetig verfolgt werden.

Um die Sensitivität der Sensorelektrode über einen andauernden Nachweisbetrieb aufrechtzuerhalten, muß die Elektrodenoberfläche durch einen entsprechenden Desorptionsschritt sowohl von der oxidierten bzw. reduzierten Anreicherungsschicht der nachzuweisenden Substanz als auch von der zusätzlich adsorbierten Sauerstoffschicht (oder auch der Wasserstoffschicht) befreit werden. In einem ersten Schritt wird dazu bevorzugt die Anreicherungsschicht oxidiert und eine Sauerstoffschicht angereichert. In dem folgenden Desorptionsschritt wird bevorzugt für eine kurze Zeit ein niedriges Potential an die Sensorelektrode angelegt, bei welchem die angereicherte Sauerstoffschicht reduziert wird (ggf. die gesamte Anreicherungsschicht desorbiert). Anschließend wird das Potential wieder auf das für die elektrochemische Umsetzung charakteristische Potential gebracht. Wiederholtes Durchfahren dieser Desorptionsschritte stellt sicher, daß die Elektrodenoberfläche tatsächlich unbelegt ist. Zusätzlich kann die Sensorelektrode noch aktiviert werden, indem der Sauerstoff in einem ersten Schritt adsorbiert und in einem zweiten Schritt wiederum desorbiert wird.

In einem weiteren Ausführungsbeispiel eines fortlaufenden Nachweisverfahrens wird das zur elektrochemischen Umsetzung charakteristische Potential linear mit der Zeit verändert. Das Potential wird hierzu nach dem Anreicherungsschritt bevorzugt sprunghaft auf einen Potentialwert gebracht und anschließend linear mit der Zeit variiert. Es durchläuft damit eine Potentialrampe mit einer bestimmten Potentialvorschubgeschwindigkeit. Dank der sprunghaften Änderung des Potentialwertes erhält man einen zeitlich genau definierten Anreicherungsschritt und verkürzt die Zeit für diesen Anreicherungsschritt und damit auch den Nachweiszyklus. Der eingestellte Wert der Potentialvorschubgeschwindigkeit wird nach oben dadurch begrenzt, daß die elektrochemisch umgesetzten Substanzen noch ausreichend Zeit finden sollen zu desorbieren. Andererseits sollte die Potentialvorschubgeschwindigkeit nicht zu langsam gewählt werden, da sich sonst die Ansprechzeit des Sensors erhöht. Durch den linearen Anstieg des Potentials von einem Anfangswert zu einem Endwert werden alle Substanzen, welche zwischen diesen beiden Werten elektrochemisch umgesetzt werden, vorteilhafterweise von der Elektrodenoberfläche desorbiert.

Weiterhin wird bevorzugt die Konzentration der Substanz über den bei der elektrochemischen Umsetzung entstehenden Strom bei einem bestimmten Potential ermittelt. Es wird dazu vorzugsweise der während der elektrochemischen Umsetzung fließende maximale Strom anstelle des über die gesamte elektrochemische Umsetzung zeitlich integrierten Stromes ermittelt und mit der angereicherten Substanzkonzentration korreliert. Der gemessene Strom kann mittels einer zuvor vorgenommenen Eichung mit der Substanzkonzentration korreliert werden.

Bevorzugt wird der/werden die mit den og. Nachweisverfahren erhaltene(n) Meßwert(e) mit einem weiteren Meßwert - nachfolgend Sauerstoffwert genannt - korrigiert, wobei der Sauerstoffwert durch wenigstens einen weiteren Nachweiszyklus - nachfolgend Referenzzyklus genannt - erhalten wird, in welchem die Substanz nicht in einem ersten Schritt an der Sensorelektrode angereichert wird. Liegen die eingestellten Potentialwerte in Bereichen, in denen gleichzeitig weitere den Nachweis störende Substanzen elektrochemisch umgesetzt oder angereichert werden, so müssen die dabei zusätzlich fließenden Ströme bei der Bestimmung der Substanzkonzentrationen in Referenzzyklen ermittelt und berücksichtigt werden. Diese störenden Substanzen sind von vornherein im Elektrolyten vorhanden wie der gebundene Sauerstoff bzw. Wasser. Während des Referenzzyklus wird keine Substanz angereichert, sondern z.B. nur der Sauerstoff adsorbiert. Anschließend wird der Sauerstoff bei demselben Potential, bei dem die nachzuweisende Substanz bereits elektrochemisch umgesetzt wurde, oxidiert oder reduziert und der dabei fließende Strom bestimmt. Zur Meßwertkorrektur wird dann der im Referenzzyklus gemessene Strom von dem in einem normalen Nachweiszyklus gemessenen Strom subtrahiert.

Dabei wird der so erhaltene Meßwert bevorzugt auf den im Referenzzyklus ermittelten Sauerstoffwert normiert. Mit dieser Normierung werden Veränderungen, Alterungs- oder Abnutzungserscheinungen der Elektrodenoberfläche vorteilhafterweise berücksichtigt und das Meßsignal entsprechend korrigiert. Die Normierung basiert darauf, daß die reine Sauerstoff- bzw. Wasserstoffadsorption in gleichem Maße wie die Anreicherung der nachzuweisenden Substanz an der Sensorelektrode von der Qualität der Sensorelektrodenoberfläche beeinträchtigt wird. Bevorzugt kann der Meßwert auch mittels der Elektrodenkapazität normiert werden.

Besonders bevorzugt wird die Elektrodenkapazität gemessen und die Anreicherung beendet, wenn die Elektrodenkapazität oder die zeitliche Änderung der Elektrodenkapazität einen vorgegebenen Wert erreicht hat. Bei diesem Nachweisverfahren - nachfolgend kombiniertes Nachweisverfahren genannt - werden im Prinzip die Potentialverfahren (Flüssigphase- und allgemeines) mit dem erfindungsgemäßen modifizierten Wechselstromverfahren kombiniert. Die Anreicherung wird wie beim modifizierten Wechselstromverfahren verfolgt. Die elektrochemische Umsetzung wird erst dann gestartet, wenn sich eine ausreichende Menge an Substanz an der Elektrodenoberfläche angereichert hat. Der daraus resultierende Oxidationsstrom liefert somit ein ausreichend großes Meßsignal und damit einhergehend eine zuverlässige Konzentrationsangabe der nachzuweisenden Substanz. Bevorzugt werden die Konzentrationen einzelner nachzuweisender Substanzen nur über die Anreicherung bestimmt und die der übrigen Substanzen entweder kombiniert über eine vorhergehende Anreicherung und anschließende elektrochemische Umsetzung oder direkt über eine elektrochemische Umsetzung.

In einer weiteren bevorzugten Variante des modifizierten Wechselsstromverfahrens oder des Potentialverfahrens (Flüssigphase-, allgemeines oder kombiniertes) wird die nachzuweisende Substanz erst an der Sensorelektrode oder einer weiteren Elektrode bei einem angelegten Potential elektrochemisch umgesetzt und das dabei entstehende wenigstens eine Produkt dann von der Sensorelektrode nachgewiesen. Zeichnet sich eine nachzuweisende Substanz durch ein geringe Anreicherungsneigung gegenüber der verwendeten Sensorelektrode aus, kann diese Substanz vorteilhaft an einer Elektrode bei einem bestimmten Potential elektrochemisch zu einem Zwischenprodukt umgesetzt werden. Das entstandene Zwischenprodukt sollte dann bei einem weiteren Potentialwert an der Elektrodenoberfläche der Sensorelektrode anreicherbar sein. Der endgültige Nachweis dieses Zwischenproduktes erfolgt dann durch das vorgestellte modifizierte Wechselstromverfahren. Bevorzugt kann die zur Erzeugung des Zwischenproduktes erforderliche Elektrode räumlich von der Sensorelektrode getrennt sein, so daß die anreicherungsträge Substanz fortlaufend nachgewiesen werden kann. Die räumliche Trennung darf dabei nicht zu groß sein, damit das Zwischenprodukt von der getrennten Elektrode zur Sensorelektrode innerhalb kürzester Zeit diffundieren kann-vorzugsweise in Bruchteilen einer Minute.

Bevorzugt wird der Nachweis über die Parameter Elektrodenmaterial, Elektrolytzusammensetzung, Anreicherung, Anreicherungspotential, Potential zur elektrochemischen Umsetzung und/oder zeitliche Änderung des Potentials zur elektrochemischen Umsetzung optimiert. Die erfindungsgemäßen Nachweisverfahren bieten eine Vielfalt an Optimierungsparametern für eine hoch sensitive und selektive Sensorelektrode. Dabei kann man Optimierungsparameter für die Anreicherung - Anreicherungszeit, Anreicherungspotential, Elektrodenmaterial und Elektrolytzusammensetzung - sowie für die elektrochemische Umsetzung - Elektrolytzusammensetzung, Elektrodenmaterial, charakteristisches Potential und dessen zeitliche Veränderung - unterscheiden.

Bei den erfindungsgemäßen Vorrichtungen ist die Sensorelektrode bevorzugt eine auf einer Seite mit einem Elektrokatalysator versehene Membran. Die Sensorelektrode ist meist auf einer Seite mit einer für den elektrochemischen Nachweis erforderlichen Elektrolytlösung benetzt. Die Elektrolytlösung ist dabei bevorzugt hygroskopisch, damit eine Wasserverdunstung weitgehend vermieden wird und ihre Zusammensetzung - Konzentration der Leitsalze - somit möglichst konstant bleibt. Bevorzugt ist die Membran aus Teflon und/oder der Elektrokatalysator eine aufgesputterte dünne Platin-, Rhodium-, oder Palladiumschicht. Platin zeichnet sich durch eine gute Anreicherungseigenschaft gegenüber einer Vielzahl von Substanzen aus, während Palladium besonders für den Nachweis gesättigter halogenierter Kohlenwasserstoffe geeignet ist. Es sind aber auch andere Metalle der Platingruppe als Elektrokatalysator einsetzbar.

Für die flüssigen Nachweisverfahren kann die Probenflüssigkeit selbst die Elektrolytlösung ersetzen. Hierbei ist die Membran bevorzugt aus einem porösen hydrophilen oder einem ionenleitenden Material (z.B. Nafion) hergestellt, wobei der Elektrokatalysator auf der der Probenflüssigkeit - und nicht der Elektrolytflüssigkeit - zugewandten Seite aufgebracht ist. Der Elektrokatalysator wird hierzu in einer so dünnen Schicht aufgebracht, daß die Membran mit Elektrokatalysator weiterhin porös oder ionenleitend ist. Ferner kann die Probenflüssigkeitsseite der Membran noch mit einem dünnen Nafion- oder Celluloseacetatfilm als Schutzfilm versehen sein. Mit diesem Aufbau ist die Sensorelektrode verhältnismäßig universell in verschiedenen (auch nichtwässrigen oder schlechtleitenden) Flüssigkeiten einsetzbar.

Für die gasförmigen Nachweisverfahren ist der Elektrokatalysator auf der der Elektrolytlösung zugewandten Seite der Membran aufgesputtert. Hierbei können die nachzuweisenden gasförmigen Substanzen durch die Membran und den Elektrokatalysator hindurchdiffundieren und sich in der Elektrolytlösung lösen, bevor sie an die Elektrodenoberfläche gelangen. Für die gasförmigen Nachweisverfahren kann aber auch die oben beschriebene Sensorelektrode für die flüssigen Nachweisverfahren eingesetzt werden.

Im folgenden wird der Erfindungskomplex anhand von Ausführungsbeispielen und der Zeichnung ausführlicher erläutert.

In der Zeichnung zeigen:

Fig. 1      in einer schematischen Darstellung einen Querschnitt durch einen Sensor, wobei die Sensorelektrode zusätzlich als Modell detailliert dargestellt ist;

Fig. 2      ein Ersatzschaltbild für das Verhalten der Sensorelektrode mit angereicherter Substanz beim modifizierten Wechselstromverfahren;

Fig. 3a    ein Diagramm eines Potential-Zeitverlaufs für das modifizierte Wechselstromverfahren;

Fig. 3b    ein Diagramm eines dazugehörigen zeitlichen Verlaufs des Imaginärteils des Wechselstroms;

Fig. 4a    ein Diagramm eines Potential-Zeitverlaufs für das Flüssigphase-Potentialverfahren zum qualitativen und quantitativen Nachweis einer Substanz;

Fig. 4b    ein Diagramm eines dazugehörigen Strom-Zeitverlaufs;

Fig. 5    ein Diagramm eines Potential-Zeitverlaufs für das allgemeine Potentialverfahren zum qualitativen und quantitativen Nachweis zweier Substanzen;

Fig. 6a    ein Diagramm eines Potential-Zeitverlaufs für das kombinierte Nachweisverfahren;

Fig. 6b    ein Diagramm eines dazugehörigen zeitlichen Verlaufs des Imaginärteils des Wechselstroms; und

Fig. 6c    ein Diagramm eines dazugehörigen Gleichstrom-Zeitverlaufs.

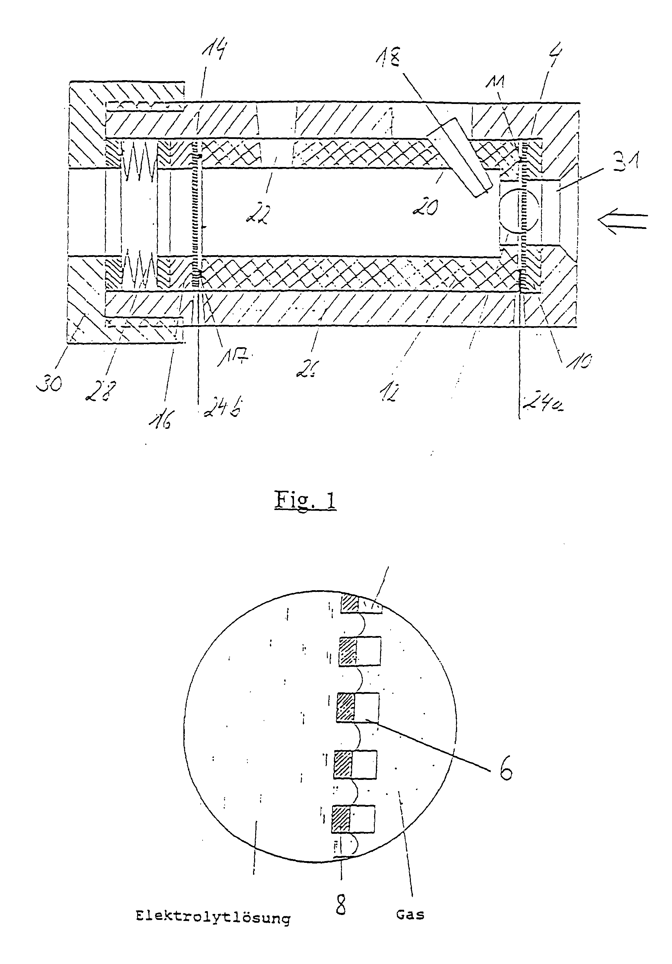

Fig. 1 zeigt in schematischer Darstellung einen Querschnitt durch einen Sensor 2, der zur Durchführung der dargestellten Nachweisverfahren von Substanzen in gasförmigen Gemischen geeignet ist.

Das Herzstück des Sensors 2 ist eine aus einer Teflonmembran 6 bestehende Sensorelektrode 4, welche im Detail modellhaft vergrößert dargestellt ist. Die Teflonmembran 6 weist vorzugsweise eine Dicke von 75 µm, eine Porenweite von 0,2 µm und einen Durchmesser von 6 mm auf. Sie trennt das Gasgemisch mit der nachzuweisenden Substanz von einer zum elektrochemischen Nachweis notwendigen Elektrolytlösung. Die Elektrolytlösung wird stark hygroskopisch ausgewählt (z.B. Perchlor- oder Schwefelsäure) und verhindert so ein schnelles Austrocknen des Sensors 2, so daß sich die Elektrolytkonzentration im Innenraum des Sensors 2 kaum ändert. Die Teflonmembran 6 ist auf ihrer der Elektrolytlösung zugewandten Innenseite mit einem Elektrokatalysator 8 (z.B. Platin) besputtert. Es entsteht eine dünne Edelmetallschicht mit einer Schichtdicke von vorzugsweise 90 nm. Außerdem ist der Rauhigkeitsfaktor der Edelmetallschicht gegenüber dem Rauhigkeitsfaktor bekannter Sensorelektroden für das amperometrische Nachweisverfahren erheblich vermindert. Die so modifizierte Teflonmembran 6 fungiert gleichzeitig als Sensor- und als Gasdiffusionselektrode. Sie wird mittels einer Andruckscheibe 10 über einen O-Ring 11 dicht an einem Sensorgehäuse 12 befestigt. Die Sensorelektrode 4 wird derart dimensioniert, daß einerseits Randeffekte (störende elektrochemische Prozesse am Rand oder in den Elektrolytspalten an der Dichtung) vernachlässigbar werden, andererseits der Widerstand der Metallschicht zum Zentrum der Sensorelektrode hin hinreichend klein wird. Der Widerstand wird hierbei vom Rand der Sensorelektrode 4, an dem der elektrische Kontakt für eine externe Elektronik vorgesehen ist, bis zum Zentrum der Sensorelektrode 4 gemessen, in dem hauptsächlich die elektrochemischen Prozesse - Anreicherung bzw. elektrochemische Umsetzung etc. - ablaufen.

Die Sensorelektrode 4 wird so in das zylindrische Sensorgehäuse 12 eingebettet, daß sie und eine gegenüberliegende Gegenelektrode 14 als Bestandteile einer Dreielektrodenanordnung dieses inerte Sensorgehäuse 12 an den offenen Seiten fest verschließen. Die Gegenelektrode 14 wird mittels eines Rings 16, einer Verdrehsicherung und eines O-Rings 17 dicht gegen das Sensorgehäuse 12 gepreßt. Vorzugsweise wird eine Referenzelektrode 18 - z.B. eine Wasser-stoffelektrode - durch eine konische Bohrung 20 in der Zylinderwand des Sensorgehäuses 12 eingeführt, so daß sie in unmittelbarer Nähe vor der Sensorelektrode 4 plaziert werden kann. Über eine weitere konische Bohrung 22 kann der Sensor 2 mit der Elektrolytlösung befüllt werden. Diese Bohrung 22 wird anschließend für den praktischen Betrieb des Sensors 2 verschlossen, um ein Auslaufen der Elektrolytlösung zu verhindern. Eventuell in der Elektrolytlösung auftretende gasförmige Produkte oder an der Gegenelektrode 14 entstehende Gase können direkt durch die poröse Teflonmembran 6 entweichen, sofern ihre Menge, bezogen auf die Fläche der Teflonmembran 6, nicht zu groß ist. Daher sollte die Fläche der Teflonmembran 6 größer als die Fläche der Sensorelektrode 4 bzw. des Elektrokatalysators sein. Dünne Drähte 24a und b stellen den elektrischen Kontakt der Sensorelektrode 4 und der Gegenelektrode 14 nach außen her.

Das Sensorgehäuse 12 ist zum Erreichen einer hohen Dichtigkeit bzw. eines hohen Anpreßdruckes des Sensors 2 von einem Stahlmantel 26 ummantelt, der mittels Blattfedern 28 und einer Überwurfmutter 30 das Sensorgehäuse 12 unter hohem Druck zusammenpreßt.

Das gasförmige Gemisch mit der/den nachzuweisenden Substanz(en) tritt in der durch den Pfeil gekennzeichneten Richtung durch eine Öffnung 31 des Stahlmantels 26 und der Andrückscheibe 10 und trifft auf die Außenseite der porösen Teflonmembran 6. Von dort gelangt es durch die Poren der Teflonmembran 6 in das Innere des Sensorgehäuses 12 und löst sich in der dort befindlichen Elektrolytlösung.

Der Sensor 2 samt zugehöriger Elektronik zum Durchführen der einzelnen erfindungsgemäßen Nachweisverfahren (Potentialprogramm, automatisches Beenden der Anreicherungsphase etc.) kann so dimensioniert werden, daß er leicht transportierbar wird. Hierfür kann auch der schwere Stahlmantel 26 durch ein geeignetes anderes Gehäuse ersetzt werden.

Insgesamt ist der Sensor 2 insbesondere hinsichtlich eines geringen Abstandes der Referenzelektrode von der Arbeitselektrode, einer guten Kontaktierung zwischen den dünnen Drähten 24a bzw. 24b und der jeweiligen Elektrokatalysatorschicht der Sensorelektrode 4 bzw. der Gegenelektrode 14, einer geringen Abmessung und einer speziellen Art der Sensorelektrode 4 sowie eines geringen Rauhigkeitsfaktors der Elektrokatalysatorschicht für die erfindungsgemäßen Nachweisverfahren optimiert worden.

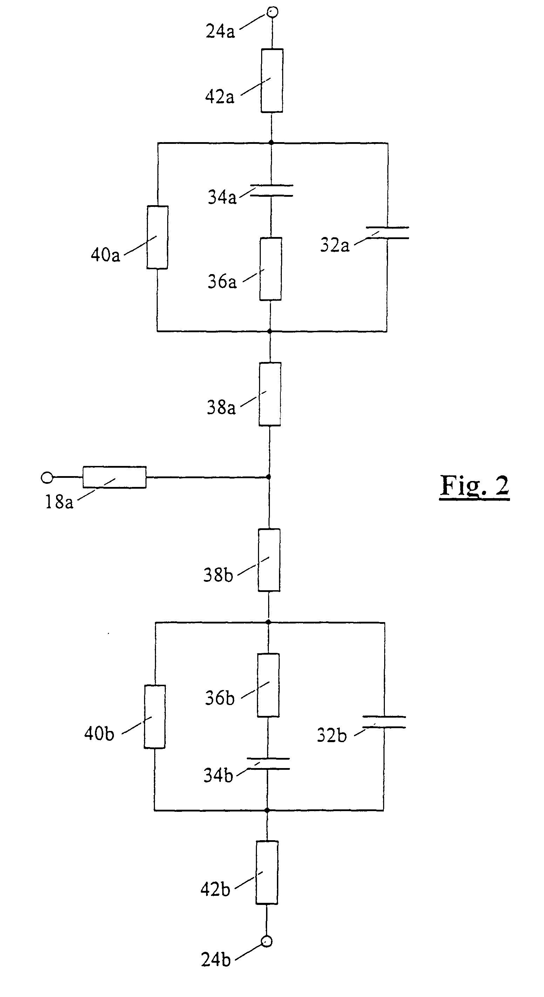

Die Fig. 2 zeigt ein Ersatzschaltbild für das elektrische Verhalten der Sensorelektrode 4, der Gegenelektrode 14 und der Referenzelektrode 18 beim modifizierten Wechselstromverfahren.

Ionen und Lösungsmittelmoleküle mit Dipolcharakter (d.h. Wassermoleküle) wechselwirken mit der metallischen Elektrodenoberfläche 8 der Sensorelektrode 4 bzw. der Gegenelektrode 14 und bilden dort eine elektrolytische Doppelschicht aus. Diese elektrolytische Doppelschicht verhält sich im einfachsten Fall wie ein Plattenkondensator 32a bzw. 32b mit einer bestimmten Doppelschichtkapazität. Diese Doppelschichtkapazität umfaßt prinzipiell alle elektrostatischen Wechselwirkungen der Ionen (Sulfationen etc.) bzw. Lösungsmittelmoleküle mit der Sensorelektrode.

Liegt zwischen der Sensorelektrode 4 und der Referenzelektrode 18 ein Potential zur Substanzanreicherung an, so kann die Substanz zu einem Adsorbat umgesetzt werden wie

$$C_2Cl_4 + 4e^- \rightarrow (C_2)_{ads.} + 4Cl^- \qquad \text{zwischen 0-0.3 V.}$$

Dieses Adsorbat kann aus Ionen sowie neutralen Molekülen mit und ohne Dipolcharakter bestehen und bildet dabei eine zusätzliche Adsorbatschicht auf der jeweiligen Elektrodenoberfläche aus. Diese Adsorbatschicht blockiert dabei die Sensorelektrode 4 dort, wo sie adsorbiert wird. Dort wird dann die Doppelschichtkapazität deutlich verringert, da sich der Abstand der Doppelschicht von der Elektrodenoberfläche aufgrund des dazwischensitzenden Adsorbats vergrößert.

Neben der Umsetzung der nachzuweisenden Substanz zum Adsorbat kann bei der Substanzanreicherung allerdings gleichzeitig auch eine konkurrierende elektrochemische Umsetzung erfolgen wie

$$C_2Cl_4 + 6H^+ + 10e^- \rightarrow C_2H_6 + 4Cl^- \qquad \text{zwischen 0-0.2 V.}$$

Auch bei einem optimalen Adsorptionspotential findet damit eventuell noch in einem geringen Maß eine unerwünschte konkurrierende elektrochemische Umsetzung der nachzuweisenden Substanz zu einem nicht mehr adsorbierenden Produkt statt. Ferner wird bei Potentialen zur Adsorption der anzureichernden Substanz noch der Luftsauerstoff reduziert, was zu einem großen zusätzlichen Strom führt, der das eigentliche Meßsignal stark überlagert. Diese parallel zur Adsorption ablaufenden elektrochemischen Umsetzungen werden mittels Widerständen 40a bzw. 40b beschrieben.

Zusätzlich zur Doppelschichtkapazität tritt noch eine weitere Pseudokapazität 34a bzw. 34b an den jeweiligen Elektroden 4 bzw. 14 auf, welche durch folgenden Effekt entsteht: Protonen aus der Lösung adsorbieren als Wasserstoff am Elektrokatalysator 8 - an einer Platinschicht läuft dabei folgende Reaktion ab:

$$Pt + H^+ + e^- \Longleftrightarrow Pt\text{-}H \qquad (\text{bzw.: } H^+ + e^- \Longleftrightarrow H_{ad})$$

Der dabei fließende Strom verhält sich genau wie ein kapazitiver Strom, daher spricht man von einer Pseudokapazität 34a bzw. 34b. Diese Pseudokapazität 34a bzw. 34b ist stark potentialabhängig und um eine Größenordnung größer als die eigentliche Doppelschichtkapazität 32a bzw. 32b. An den Stellen der Sensorelektrode 4, an denen die nachzuweisende Substanz (irreversibel) adsorbiert, kann sodann kein Wasserstoff mehr adsorbieren, wodurch sich neben der Doppelschichtkapazität (s.o.) auch die Pseudokapazität 34a bzw. 34b verringert.

Widerstände 36a und 36b beschreiben die begrenzte Geschwindigkeit der Wasserstoffadsorption. Diese Geschwindigkeit ist aber extrem hoch und die Widerstände 36a und 36b somit entsprechend klein, so daß die Doppelschichtkapazitäten 32a und 32b sowie die Pseudokapazitäten 34a und 34b kaum voneinander unterscheidbar sind.

Anstelle der Wasserstoffadsorption kann auch die Adsorption von Metallionen wie Kupfer nach

$$Cu^{2+} + 2e^- \Longleftrightarrow Cu_{ads.}$$

ausgenutzt werden. Da manche nachzuweisenden Substanzen die Adsorption von Kupfer verhindern, läßt sich damit die Selektivität des Sensors 2 steigern. In diesem Fall ist der Wert der Widerstände 36a und 36b allerdings zu berücksichtigen.

Die Referenzelektrode 18 wird durch eine komplexe Impedanz 18a beschrieben. Diese Impedanz 18a ist aber wie der über sie fließende Strom so niedrig, daß kein Potentialgefälle auftritt.

Der ohmsche Widerstand der Elektrolytlösung vor der jeweiligen Elektrode 4 bzw. 14 wird durch einen Elektrolytwiderstand 38a bzw. 38b wiedergegeben.

Der ohmsche Widerstand der jeweiligen Elektrokatalysatorschicht wird durch entsprechende Widerstände 42a bzw. 42b beschrieben. Er ist aber jeweils von dem ohmschen Widerstand der Elektrolytlösung technisch meßbar nicht unterscheidbar.

Mit Hilfe des in Fig. 2 gezeigten Ersatzschaltbildes wird die Doppelschichtkapazität (ggf. auch die Pseudokapazität) aus der gemessenen Impedanz der Sensorelektrode 4 über den Imaginärteil des Wechselstroms abgeleitet und mit der Anreicherung bzw. der zeitlichen Änderung der Anreicherung korreliert. Aus der zeitlichen Anreicherungsmenge kann dann die Konzentration und der Typ der angereicherten Substanz bestimmt werden.

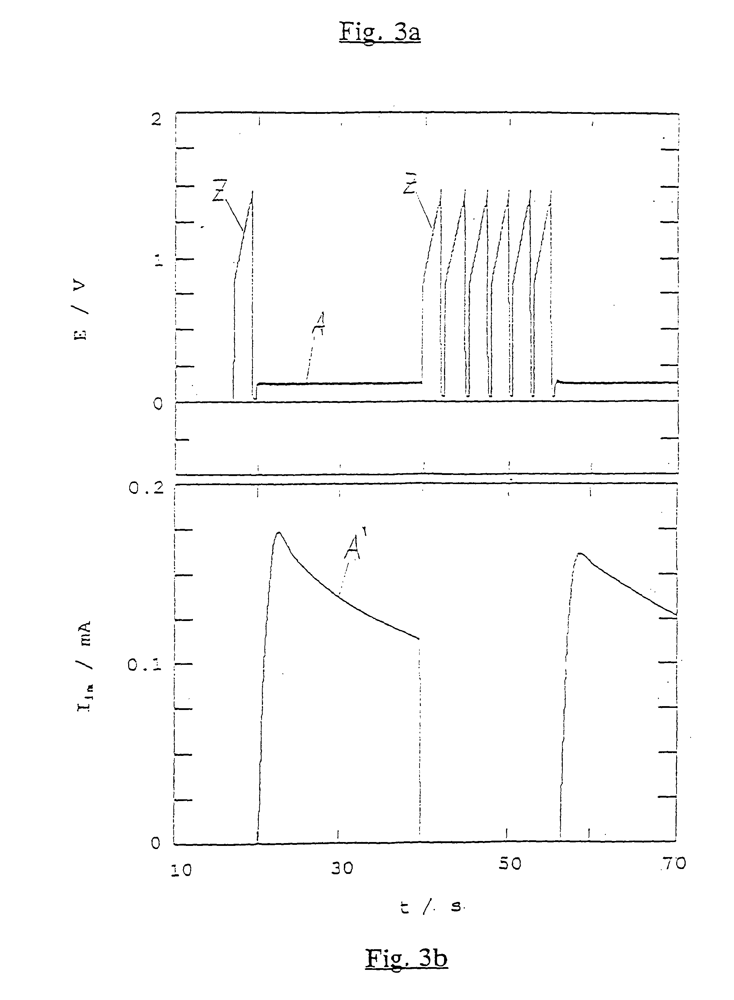

Die Fig. 3a zeigt ein Diagramm eines Potential-Zeitverlaufs für das modifizierte Wechselstromverfahren am Beispiel eines Nachweises von Perchlorethylen in synthetischer Luft. Die Fig. 3b zeigt ein Diagramm eines dazugehörigen zeitlichen Verlaufs des Wechselstrom-Imaginärteils - im folgenden Wechselstromtransient A' genannt. In den Fig. 3a bzw. b gibt die Ordinate das Potential in Volt bzw. den Imaginärteil des Wechselstroms in Milliampere und die Abzisse jeweils die Zeit in Sekunden wider. Die Elektrodenoberfläche ist in diesem Beispiel eine Platinschicht und die Elektrolytlösung enthält als Leitsalz 1 M $HClO_4$.

In einem ersten Nachweisschritt Z (Fig. 3a) - im folgenden auch Desorption Z genannt - wird die Elektrodenoberfläche durch eine Oxidation/Reduktion von eventuell vorhandenen Verunreinigungen befreit und aktiviert. Hierzu wird das an die Sensorelektrode 4 angelegte Potential auf Werte angehoben bzw. gesenkt, bei denen eventuell an der Elektrodenoberfläche anhaftende Substanzen elektrochemisch umgesetzt und desorbiert werden.

In einem zweiten Nachweisschritt A - im folgenden auch Anreicherung A genannt - wird ein Gleichstrom-Potential angelegt, bei dem wenn möglich keine elektrochemische Reaktion der nachzuweisenden Substanz in Elektrodennähe katalysiert wird, sondern vielmehr möglichst selektiv die nachzuweisende Substanz angereichert wird. Der genaue Wert für dieses Potential richtet sich nach den thermodynamischen und kinetischen Eigenschaften der anzureichernden Substanz. Auch die Anreicherungsgeschwindigkeit ist von dem angelegten Potential abhängig. Perchlorethylen reichert sich beispielsweise bei einem Potentialwert von 100 mV mit einer hohen Anreicherungsgeschwindigkeit an.

Beim modifizierten Wechselstromverfahren wird während der Anreicherung A das Gleichstrom-Potential von einer Wechselspannung mit einer Amplitude von 10 mV und einer Frequenz von 10 Hz überlagert. Der dabei fließende Wechselstromtransient A' (Fig. 3b) wird als Meßsignal von der Sensorelektronik aufgezeichnet. Für die Auswertung des Meßsignals wird der anfängliche Abfall des Wechselstromtransienten A' genommen, in Beziehung zur Anreicherungsgeschwindigkeit gesetzt und diese mit der Konzentration der angereicherten Substanz korreliert. Wie die Fig. 3a und b verdeutlichen, sind der Anfang der Anreicherung A und das Einsetzen eines konstanten Wechselstromtransienten A' gegeneinander zeitlich versetzt, was vom Einstellungsvorgang des Anreicherungspotentials, vom Elektrolytwiderstand oder auch meßtechnisch bedingt ist. Dieses modifizierte Wechselstromverfahren zeichnet sich durch eine hohe Linearität zwischen Meßsignal und Substanzkonzentration aus, da die Anreicherungsgeschwindigkeit quasi direkt meßbar und als einfache Funktion der Konzentration darstellbar ist.

Nach der Anreicherung A werden Desorptionsschritte Z durchgeführt, um die angereicherte Substanz über eine Oxidation bzw. Reduktion möglichst vollständig von der Elektrodenoberfläche zu desorbieren. Nach dem fünften Desorptionsschritt Z in Folge ist die Sensorelektrode wieder ausreichend gereinigt und gleichzeitig aktiviert.

Die Menge angereicherter Substanz trägt maßgeblich zur Empfindlichkeit des Sensors 2 bei. Damit der Sensor 2 auch bei unterschiedlichen Substanzkonzentrationen gleich empfindlich ist, wird der Wechselstromtransient A' während der gesamten Anreicherung A verfolgt und daraus abgeleitet, ob sich bereits eine ausreichende Substanzmenge angereichert hat.

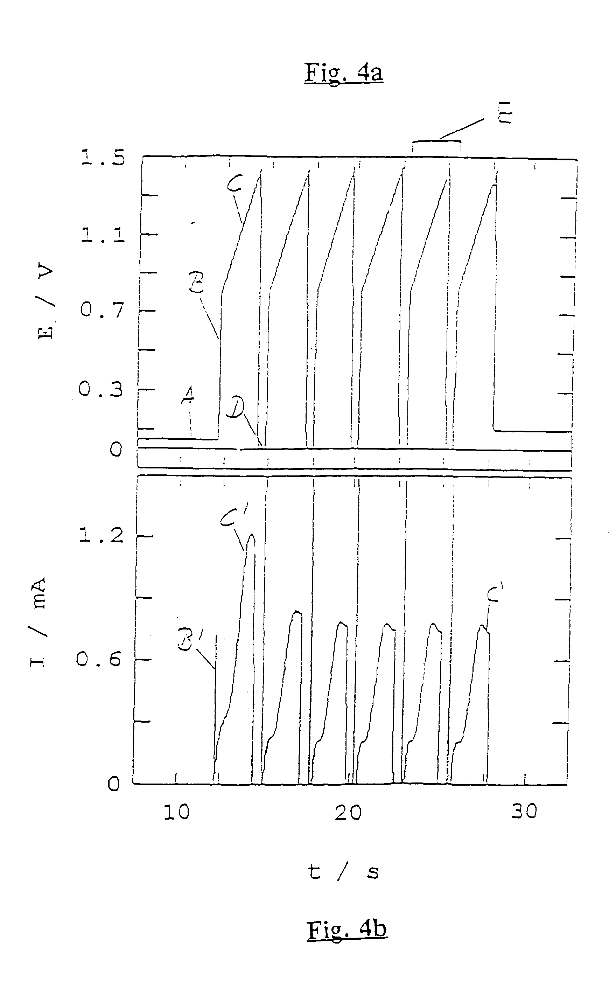

Fig. 4a zeigt ein Diagramm eines Potential-Zeitverlaufs für eines der Potentialverfahren zum selektiven quantitativen Nachweis einer nachzuweisenden Substanz. In dem Diagramm gibt die Ordinate das Potential in Volt und die Abzisse die Zeit in Sekunden wider. Der Potential-Zeitverlauf wird am Beispiel eines Nachweises von Benzol in flüssiger Phase (wie auch in gasförmiger Phase) an einer mit Platin besputterten Sensorelektrode 4 dargestellt.

In einem ersten Nachweisschritt, dem Anreicherungsschritt A wird 20 s lang ein Potential von 200-300 mV an die Sensorelektrode 4 gelegt, um eine bestimmte Menge nachzuweisender Substanz anzureichern. Hierbei werden - wie aus der heterogenen Katalyse bekannt - die internen Bindungen der angereicherten bzw. adsorbierten Substanz geschwächt. Eine anschließende Oxidation kann dann bei niedrigeren Potentialen erfolgen als die zur Oxidation einer freien, also nicht adsorbierten Substanz. Während der Anreicherung bzw. Adsorption der Substanz wird gleichzeitig der Luftsauerstoff reduziert. Dies führt zu einem großen negativen Strom (nicht gezeigt) an der Sensorelektrode 4, hat aber keinen Einfluß auf den Nachweisvorgang.

In einem zweiten Nachweisschritt B - im folgenden auch Potentialsprung B genannt - wird das Potential sprunghaft auf 900 mV erhöht. Dieser Potentialwert ist so groß gewählt, daß eine Oxidation der angereicherten Substanz bzw. Schicht gerade noch nicht einsetzt.

In einem dritten Nachweisschritt C - im folgenden auch Oxidation C genannt - wird das Potential linear in der Zeit mit einer Potentialvorschubgeschwindigkeit von 300 mV/s erhöht. Hierbei wird die angereicherte Schicht oxidiert und gleichzeitig weitgehend desorbiert - Benzol oxidiert beispielsweise an Platinelektroden nach

$$(C_6H_6)_{ads.} + 12H_2O \rightarrow 6CO_2 + 30e^- + 30\ H^+.$$

Bei Potentialen größer als etwa 0.7 V fängt zusätzlich der im Wasser der Elektrolytflüssigkeit gebundene Sauerstoff an zu adsorbieren:

$$H_2O \rightarrow O_{ads.} + 2e^- + 2H^+.$$

Dabei bildet er eine klar definierte Oxiddeckschicht als Monolage aus. Er kann dabei - in manchen Fällen - die bereits adsorbierte und jetzt elektrochemisch umzusetzende, nachzuweisende Substanz (Benzol) an der Sensorelektrode 4 verdrängen:

$$(C_6H_6)_{ads.} + H_2O \rightarrow C_6H_6 + O_{ads.} + 2H^+ + 2e^-.$$

Die Potentialrampen dienen dabei der möglichst vollständigen Oxidation und Desorption der angereicherten Substanz.

In einem vierten Nachweisschritt D - im folgenden auch Reduktion D genannt - wird das Potential für den Bruchteil einer Sekunde (z.B. 0.5 sec.) wieder auf ein stark kathodisches Potential von 50 mV vermindert, welches ungefähr dem Anreicherungspotential entspricht. Die Zeit für den vierten Nachweisschritt D ist so kurz gewählt, daß sich einerseits die nachzuweisende Substanz nicht erneut an der Elektrodenoberfläche anlagern kann und andererseits die gesamte Oxiddeckschicht reduziert und dabei desorbiert wird.

Die drei Nachweisschritte B, C und D, d.h. der Potentialsprung B, die Oxidation C und die Reduktion D bilden einen Nachweiszyklus E. Dieser Nachweiszyklus E wird in Folge fünf mal wiederholt. Hiermit wird die nachzuweisende bzw. zusätzlich angereicherte Substanzen vollständig von der Elektrodenoberfläche entfernt bis schließlich nur noch die sich in jedem Nachweiszyklus E neu ausbildende, klar definierte Oxiddeckschicht zurückbleibt. Im fünften Nachweiszyklus E kann man davon ausgehen, daß keine angereicherte Substanz mehr auf der Elektrodenoberfläche vorhanden ist.

Fig. 4b zeigt ein Diagramm des Strom-Zeitverlaufs, welcher aufgrund des in Fig. 4a gezeigte Potentialprogramms fließt. In dem Diagramm gibt die Ordinate den Strom in Milliampere und die Abzisse die Zeit in Sekunden wider.

Der Strom-Zeitverlauf zeigt für jeden Nachweiszyklus E des Potential-Zeitverlaufs eine Stromspitze B' und einen darauffolgenden Oxidationsstrom C'.

Der Strompeak B' tritt während des Potentialsprungs B auf und resultiert aus der dabei auftretenden Doppelschichtumladung an der Sensorelektrode 4.

Der Oxidationsstrom C' steigt bis zu einem Maximum stark an, welches bei dem in Fig. 4b gezeigten Ausführungsbeispiel beim höchsten Potentialwert der Potentialrampe der Oxidation C liegt. Dieses Maximum kann auch zu einem anderen Wert des Potentials der Potentialrampe erreicht werden. Der Oxidationsstrom C' resultiert aus einer Überlagerung zweier Ströme, von denen der eine aufgrund der Oxidation C der nachzuweisenden, angereicherten und zusätzlich angereicherten Substanzen und der andere aufgrund der Ausbildung der Oxiddeckschicht auf der Elektrodenoberfläche fließt. Das Maximum des Oxidationsstroms C' nimmt vom ersten bis zum fünften Nachweiszyklus E stetig ab. Im fünften Nachweiszyklus E ist der Anteil des aufgrund der Oxidation C von angereicherten Substanzen fließenden Stromes so gering, daß nur noch die Ausbildung der Oxiddeckschicht zum Oxidationsstrom C' beiträgt. Am Beispiel des Benzols wird der Oxidationsstrom C' z.B. bei 1.44 V gemessen.

Ein mit der Konzentration zu korrelierendes Meßsignal erhält man beispielsweise, indem man die Differenz zwischen den gemessenen Oxidationsströmen C' im ersten und im fünften Nachweiszyklus E bildet. Dasjenige Potential, an dem diese beiden Oxidationsströme C' innerhalb eines Nachweiszyklus E gemessen werden, kann so gewählt werden, daß die daraus resultierende Differenz maximal ist. In diesem Beispiel wird die Differenz der maximalen Werte der Oxidationsströme C' gebildet.

Die Anreicherung einer Substanz an der Elektrodenoberfläche wird in erheblichem Maße von der Beschaffenheit dieser Oberfläche beeinflußt. Somit sollte das erhaltene Meßsignal geeignet normiert werden, um es gut reproduzieren zu können. Für diese Normierung wird die Differenz der Oxidationsströme C' im ersten und im fünften Nachweiszyklus E gebildet und auf den im fünften Nachweiszyklus E ermittelten Oxidationsstrom C' normiert. Der im fünften Nachweiszyklus E gemessene Oxidationsstrom C' spiegelt die realen, die Anreicherungsverhältnisse prägenden Oberflächenverhältnisse wider. Das Meßsignal ist nach dieser Normierung eine dimensionslose Größe.

Die Empfindlichkeit des Sensors 2 wird durch die Anreicherung A stark verbessert. Der während der elektrochemischen Umsetzung der angereicherten Substanz fließende, mit der Konzentration zu korrelierende Oxidationsstrom C' ist von der während der Anreicherung A akkumulierten Substanzmenge abhängig. Das Meßsignal wird somit in erheblichem Maße von der zur Anreicherung A zur Verfügung stehenden Zeit beeinflußt. Diese Zeit kann auch automatisch über eine Messung der Elektrodenkapazität optimiert werden. Hierzu wird das Anreicherungspotential nur solange angelegt, bis die Elektrodenkapazität einen vorgegebenen Wert erreicht. Für den Nachweis von Benzol lassen sich noch Konzentrationen bis 1 ppm sicher nachweisen. (Perchlorethylen läßt sich beipielsweise bis 30 ppm, mit einer verbesserten Auswerteelektronik sogar bis zu 3 ppm nachweisen).

Die Dauer eines Nachweises mit 5 Nachweiszyklen E beträgt beispielsweise für Benzol 20 Sekunden (für Perchlorethylen z.B. 36 Sekunden).

Die Selektivität des Sensors 2 dagegen ist von der Wahl des Elektrodenmaterials und des Elektrolyten abhängig. Darüberhinaus spielen die maximale potentialabhängige Anreicherungsgeschwindigkeit und auch die potentialabhängigen bei der elektrochemischen Umsetzung fließenden Oxidationsströme C' eine erhebliche Rolle, da unterschiedliche Substanzen bei verschiedenen Potentialen oxidiert bzw. im umgekehrten Falle reduziert werden. In dem hier vorgestellten Verfahren stehen mehrere Meßparameter zur Verfügung, um die Selektivität des Meßsignals zu erhöhen. Auf der Sensorseite zählen hierzu das Elektrodenmaterial bzw. das Elektrodenmetall, der Elektrolyt, der pH-Wert der Elektrolytlösung und das Material des lösungsseitigen Films (beim Sensor für die flüssige Phase). Das Ausmaß und die Geschwindigkeit der Adsorption der nachzuweisenden Substanz lassen sich durch Ionen oder Zusätze in dem Elektrolyten beeinflussen, welche selbst bei bestimmten Potentialen adsorbieren ohne umgesetzt zu werden. Dieser Effekt hängt stark von der Art der nachzuweisenden Substanz ab und führt deshalb zu einer höheren Selektivität des Sensors. Auf der Elektronikseite des Sensors zählen zu diesen Meßparametern das Adsorptionspotential, das Oxidationspotential (bei linearen Potentialrampen entspricht das dem Potential, bei dem der Oxidationsstrom erfaßt wird) und der Zeitpunkt, zu dem - im Fall der Oxidation bei konstantem Potential - der Oxidationsstrom erfaßt wird bzw. die Steilheit der Potentialrampe (verschiedene Substanzen werden unterschiedlich schnell oxidiert). Der besondere Vorteil der elektronischen veränderbaren Parameter liegt darin, daß sie automatisch oder manuell schnell veränderbar sind.

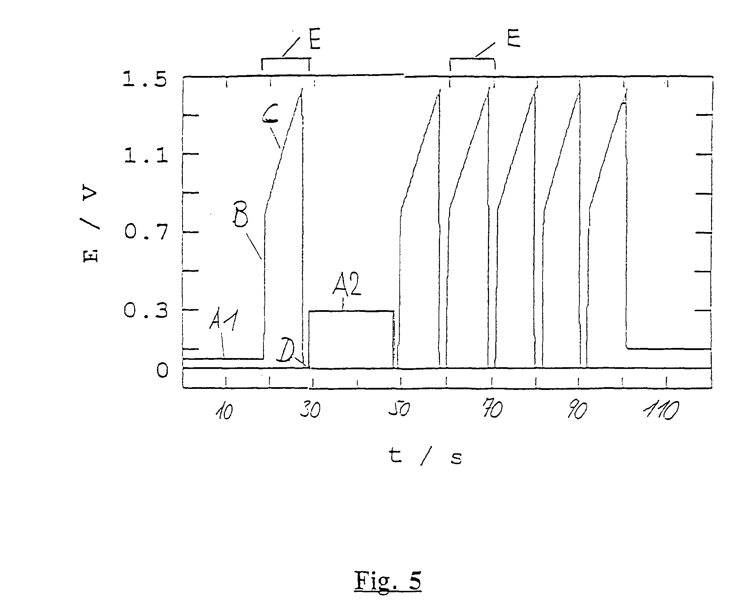

Fig. 5 zeigt ein Diagramm eines Potential-Zeitverlaufs für das allgemeine Potentialverfahren zum Nachweis von zwei Substanzen. In dem Diagramm gibt die Ordinate das Potential in Volt und die Abzisse die Zeit in Sekunden wieder. Der Nachweis zweier nachzuweisender Substanzen wird am Beispiel von Perchlorethlyen und Toluol in Luft mittels einer platinbeschichteten Elektrodenoberfläche und einer 1 M HClO$_4$-Elektrolytlösung erläutert.

In einem ersten Nachweisschritt A1 wird 20 s lang ein niedriges Potential von 50 mV an die Sensorelektrode 4 angelegt, bei dem sich sowohl Perchlorethylen als auch Toluol an der Elektrodenoberfläche anreichern.

In einem zweiten Nachweisschritt B - im folgenden auch Potentialsprung B genannt - wird das Potential sprunghaft auf 900 mV erhöht. Dieser Potentialwert ist so groß gewählt, daß eine Oxidation der beiden angereicherten Substanzen gerade noch nicht einsetzt.

In einem dritten Nachweisschritt C - im folgenden auch Oxidation C genannt - wird das Potential linear in der Zeit mit einer Potentialvorschubgeschwindigkeit von 300 mV/s erhöht. Hierbei werden die beiden angereicherten Substanzen oxidiert.

In einem vierten Nachweisschritt D - im folgenden auch Reduktion D genannt - wird das Potential sprunghaft auf ein tiefes Potential vermindert, bei dem der adsorbierte Sauerstoff reduziert wird und eventuell vorhandene Reste von Toluol und Perchlorethylen desorbieren.

Die drei Nachweisschritte B, C und D bilden wiederum einen Nachweiszyklus E. Dieser Nachweiszyklus E kann in Folge fünfmal wiederholt werden (nicht gezeigt). Hiermit werden das Toluol und das Perchlorethylen möglichst vollständig von der Elektrodenoberfläche entfernt.

In einem fünften Nachweisschritt A2 wird ein niedriges Potential von 300 mV an die Sensorelektrode 4 gelegt, bei dem sich weitgehend nur Toluol anreichert.

Anschließend werden der Potentialsprung B, die Oxidation C und die Reduktion D wiederholt, wobei bei der Oxidation C nur das angereicherte Toluol oxidiert wird. Perchlorethylen würde auch bei dem angelegten Potential oxidieren. Dank der ausschließlichen Anreicherung von Toluol im fünften Nachweisschritt A2 wird diese Oxidation von Perchlorethylen aber unterbunden.

Es folgen weitere aus dem Potentialsprung B, der Oxidation C und der Reduktion D zusammengesetzte Nachweiszyklen E, um die Sauerstoffadsorption an und Veränderungen der Elektrodenoberfläche zu ermitteln.

Während des gesamten Nachweises wird der Strom-Zeitverlauf gemessen und aufgezeichnet, um entsprechende Stromwerte mit den Substanzkonzentrationen zu korrelieren.- Es reicht allerdings auch, nur die Stromwerte bei der Oxidation im Maximum bzw. bei einem charakteristischen Potential aufzuzeichnen. Zuerst werden hierzu die von der Oxidation C der ersten angereicherten - aus Perchlorethylen und Toluol bestehenden - Schicht und der Oxidation C der zweiten angereicherten - weitgehend aus Toluol bestehenden - Schicht stammenden Oxidationsströme gemessen. Dabei werden - analog zu dem in den Fig. 4a und 4b gezeigten Nachweisverfahren-jeweils die Differenzwerte der im ersten und fünften Nachweiszyklus E gemessenen Oxidationsströme bestimmt. Der so erhaltene Differenzwert, welcher von der Oxidation C der zweiten angereicherten - weitgehend aus Toluol bestehenden - Schicht stammt, ist ein Maß für die Toluolkonzentration in dem untersuchten Stoffgemisch, da der auf die Sauerstoffadsorption zurückzuführende Stromanteil des Oxidations-stromes C' eliminiert ist. Die Differenz der oben bestimmten Differenzwerte ist wiederum ein Maß für die Perchlorethylenkonzentration, da der auf die Sauerstoffadsorption sowie auf die Toluoloxidation zurückzuführende Stromanteil des Oxidationsstromes C' eliminiert ist.

Der Sensor 2 kann somit - entsprechend seinem aufgeprägten Potentialprogramm - zwischen verschiedenen nachzuweisenden Substanzen unterscheiden. Dies gilt insbesondere für nachzuweisende Substanzen in einem Gemisch, deren Anreicherungspotentiale sich stark unterscheiden - wie Perchlorethylen und Toluol, Benzol oder Vinylacetat. Diese können auch bei wesentlich anodischeren Potentialen angereichert werden.

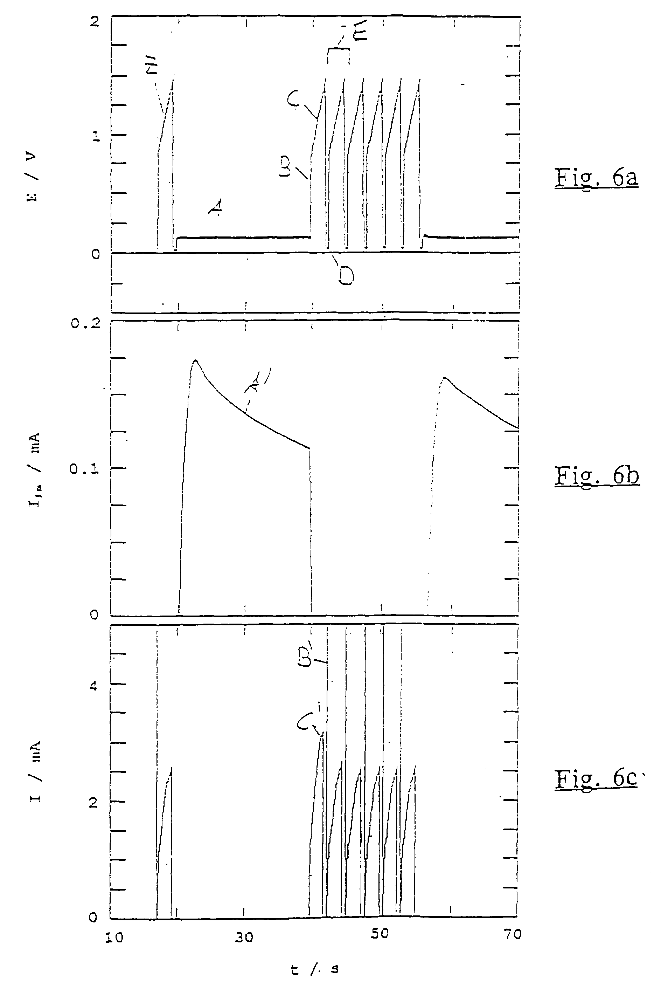

Die Fig. 6a-c zeigen in Diagrammen einen Potential-Zeitverlauf (Fig. 6a), einen dazugehörigen Wechselstromtransienten A' (Fig. 6b) und einen dazugehörigen Gleichstrom-Zeitverlauf C' (Fig. 6c) für das kombinierte Nachweisverfahren, also das Messen der Elektrodenkapazität während der Substanzanreicherung und die Strommessung bei der anschließenden elektrochemischen Umsetzung der so angereicherten Substanz(en). In dem Diagramm der Fig. 6a gibt die Ordinate das Potential in Volt und die Abzisse die Zeit in Sekunden wider. In den Diagrammen der Fig. 6b bzw. c gibt die Ordinate den Imaginärteil des Wechselstroms bzw. den Gleichstrom in mA, die Abzisse die Zeit in Sekunden wider.

Dem eingestellten Potentialwert während der Anreicherung A wird eine niederfrequente Wechselspannung überlagert. Wie beim modifizierten Wechselstromverfahren kann so über eine Messung des Wechselstromtransienten die Anreicherung der nachzuweisenden Substanz an der Elektrodenoberfläche verfolgt werden. Die elektrochemischen Umsetzung bzw. Oxidation C wird erst dann gestartet, wenn sich eine ausreichende Menge Substanz an der Elektrodenoberfläche angereichert hat. Der daraus resultierende Oxidationsstrom C' liefert somit ein ausreichend großes Meßsignal und damit einhergehend eine zuverlässige Konzentrationsangabe der angereicherten Substanz. Diese Konzentrationsangabe wird in Beziehung zur Anreicherungszeit gesetzt, um die tatsächliche Konzentration der nachzuweisenden Substanz in dem untersuchten Gemisch zu erhalten.

Somit ist bei diesem vorgestellten Verfahren die Anreicherungszeit nicht länger konstant, sondern automatisch an die herrschende Substanzkonzentration angepaßt. Für eine hohe Substanzkonzentration reicht eine kürzere Anreicherungszeit aus, eine niedrige Substanzkonzentration erfordert eine längere Anreicherungszeit, um eine ausreichende Menge nachzuweisender Substanz an der Elektrodenoberfläche anzureichern. Ferner bietet dieses Verfahren vorteilhaft eine kontinuierliche Funktionskontrolle des Sensors durch Messen des Stromes im fünften Nachweiszyklus und der Kapazität ohne Anreicherung.

**Patentansprüche**

1.  Verfahren zum fortlaufenden Nachweis mindestens einer Substanz in einem gasförmigen oder flüssigen Gemisch mittels einer Sensorelektrode (4), bei welchem:

    a) die Substanz an der Oberfläche der Sensorelektrode durch Anlegen eines für die nachzuweisende Substanz charakteristischen Adsorptionspotentials angereichert (A);
    b) die Anreicherung (A) durch eine Impedanzmessung der Elektrodenkapazität der Sensorelektrode (4) bestimmt;
    c) der so erhaltene Meßwert mit der Substanz korreliert;
    d) die an der Oberfläche der Sensorelektrode (4) angereicherte Substanz entfernt wird; und
    e) die Schritte a) - d) wiederholt werden.

2.  Verfahren nach Anspruch 1, bei welchem die Konzentration der Substanz aus der Differenz der Elektrodenkapazität der Sensorelektrode (4) ohne und mit einer Anreicherung (A) der Substanz an der Elektrodenoberfläche bestimmt wird.

3.  Verfahren nach Anspruch 1, bei welchem die Konzentration der Substanz aus der zeitlichen Änderung der Elektrodenkapazität der Sensorelektrode (4) bestimmt wird.

4. Verfahren nach einem der vorstehenden Ansprüche, bei welchem die Anreicherung (A) beendet wird, wenn die gemessene Elektrodenkapazität oder die gemessene zeitliche Änderung der Elektrodenkapazität der Sensorelektrode einen vorgegebenen Wert erreicht.

5. Verfahren nach einem der vorstehenden Ansprüche, bei welchem der so erhaltene Meßwert auf einen weiteren, ggf. über wenigstens eine weitere Messung der Elektrodenkapazität der Sensorelektrode ermittelten Meßwert normiert wird, bei welchem im wesentlichen nicht die nachzuweisende Substanz, sondern nur der Sauerstoff bzw. Wasserstoff an der Sensorelektrode (4) angereichert wird (A).

6. Verfahren nach einem der vorstehenden Ansprüche, bei welchem die nachzuweisende Substanz erst an der Sensorelektrode (4) oder einer weiteren Elektrode bei einem angelegten Potential elektrochemisch umgesetzt wird und das dabei entstehende wenigstens eine Produkt dann von der Sensorelektrode (4) nachgewiesen wird.

7. Verfahren nach einem der vorstehenden Ansprüche, bei welchem zur Entfernung der an der Elektrodenoberfläche angereicherten Substanz das Potential auf ein für dessen elektrochemische Umsetzung und/oder Desorption charakteristisches Potential gebracht wird (D).

8. Verfahren nach einem der vorstehenden Ansprüche, bei welchem der Nachweis über die Parameter Elektrodenmaterial, Elektrolytzusammensetzung, Anreicherung (A), Anreicherungspotential, Potential zur elektrochemischen Umsetzung (C) und/oder zeitliche Änderung des Potentials zur elektrochemischen Umsetzung optimiert wird.

9. Verfahren nach einem der vorstehenden Ansprüche, bei welchem:

   a) die Anreicherung (A) beendet wird, wenn die Elektrodenkapazität oder die zeitliche Änderung der Elektrodenkapazität einen vorgegebenen Wert erreicht hat;
   b) das Potential auf ein für die elektrochemische Umsetzung (C) der Substanz charakteristisches Potential gebracht (B);
   c) der dabei entstehende Strom (C') gemessen; und
   d) der so erhaltene Meßwert und der Meßwert aus der Impedanzmessung mit der Substanz korreliert wird.

10. Verfahren nach einem der Ansprüche 1 bis 8 zum fortlaufenden Nachweis wenigstens zweier Substanzen, bei welchem:

    a) wenigstens zwei Nachweiszyklen (E) durchgeführt werden, wobei pro Nachweiszyklus (E)

       a1) die Anreicherung (A) wenigstens einer nachzuweisenden Substanz beendet wird, wenn die Elektrodenkapazität oder die zeitliche Änderung der Elektrodenkapazität einen vorgegebenen Wert erreicht hat; und ggf.
       a2) danach das Potential auf ein für die elektrochemische Umsetzung (C) wenigstens einer Substanz charakteristisches Potential gebracht wird (B); sowie
       a3) der dabei entstehende Strom (C') gemessen wird; und

    b) anschließend die so erhaltenen Meßwerte und die Meßwerte aus der Impedanzmessung mit den Substanzen korreliert werden.

11. Verfahren nach Anspruch 9 oder 10, bei welchem das für die elektrochemische Umsetzung (C) charakteristische Potential linear mit der Zeit verändert wird.

12. Verfahren nach einem der Ansprüche 9 bis 11, bei welchem die Konzentration der Substanz über den bei der elektrochemischen Umsetzung (C) enstehenden Strom (C') bei einem bestimmten Potential bestimmt wird.

13. Vorrichtung zum fortlaufenden Nachweis mindestens einer Substanz in einem gasförmigen oder flüssigen Gemisch mittels einer Sensorelektrode (4), mit:

    a) Mitteln zum Anlegen eines für die Anreicherung (A) der Substanz an der Oberfläche der Sensorelektrode (4) charakteristischen Potentials an die Sensorelektrode (4),
    b) Mitteln zur Impedanzmessung der Elektrodenkapazität der Sensorelektrode (4) in Folge der Anreicherung (A),

**14**

c) Mitteln zur Korrelation des so erhaltenen Meßwertes mit der Substanz und

d) Mitteln zum Entfernen (C,D) der an der Oberfläche der Sensorelektrode (4) angereicherten Substanz.

**14.** Vorrichtung nach Anspruch 13, mit:

a) Mitteln zum Beenden der Anreicherung (A), wenn die Elektrodenkapazität oder die zeitliche Änderung der Elektrodenkapazität einen vorgegebenen Wert erreicht hat;

b) Mitteln zum Verändern (B) des Potentials auf ein für die elektrochemische Umsetzung (C) der Substanz charakteristisches Potential;

c) Mitteln zum Messen des dabei entstehenden Stroms (C') ; und

d) Mitteln zur Korrelation des so erhaltenen Meßwertes und des Meßwertes aus der Impedanzmessung mit der Substanz.

**15.** Vorrichtung nach Anspruch 13 oder 14, mit:

a) einem Sensor (2), der aus einer einen Elektrolyten des Sensors (2) von dem Gemisch trennenden Membran (6) und einer der Membran (6) benachbarten Sensorelektrode (4) besteht; und

b) Mitteln zum Zuführen des Gemisches an die dem Elektrolyten abgewandten Seite der Membran (6).

**16.** Vorrichtung nach einem der Ansprüche 13 bis 15, bei welcher eine Edelmetallschicht (8) auf einer Seite der Membran (6) der Sensorelektrode (4) angebracht ist.

**17.** Vorrichtung nach Anspruch 16, bei welcher die Sensorelektrode (4) einen im Vergleich zu herkömmlichen Sensorelektroden geringeren Rauhigkeitsfaktor aufweist.


**Claims**

**1.** Method for the continuous detection of at least one substance in a gaseous or liquid mixture with a sensor electrode (4), in which:

(a) the substance is enriched on the surface of the sensor electrode by application of an adsorption potential characteristic for the substance to be detected (A);

(b) the enrichment (A) is determined by an impedance measurement of the electrode capacitance of the sensor electrode (4);

(c) the measured value thus obtained is correlated with the substance;

(d) the substance enriched on the surface of the sensor electrode (4) is removed;
     and

(e) steps a) - d) are repeated.

**2.** Method according to Claim 1, in which the concentration of the substance is determined from the difference of the electrode capacitance of the sensor electrode (4), without and with enrichment (A) of the substance on the electrode surface.

**3.** Method according to Claim 1, in which the concentration of the substance is determined from the time change of the electrode capacitance of the sensor electrode (4).

**4.** Method according to one of the previous Claims, in which the enrichment (A) is ended when the measured electrode capacitance or the measured change of the electrode capacitance of the sensor electrode as a function of time reaches a predetermined value.

**5.** Method according to one of the previous Claims, in which the measured value thus obtained is normalized to another measured value optionally determined through at least other measurement of the electrode capacitance of the sensor electrode, in which essentially not the substance to be detected, but only oxygen or hydrogen is enriched at the sensor electrode (4), (A).

**6.** Method according to one of the previous Claims in which the substance to be detected is first reacted at the sensor electrode (4) or at another electrode electrochemically at an applied potential and at least one product thus obtained is then detected by the sensor electrode (4).

7. Method according to one of the previous Claims, in which, in order to remove the substance enriched at the electrode surface, the potential is brought to a potential characteristic for its electrochemical reaction and/or desorption, (D).

8. Method according to one of the previous Claims, in which the detection is optimized through the parameters of electrode material, electrolyte composition, enrichment (A), enrichment potential, potential for electrochemical reaction (C) and/or change of the potential for electrochemical reaction as a function of time.

9. Method according to one of the previous Claims, in which:

   (a) the enrichment (A) is completed when the electrode capacitance or the change of the electrode capacitance as a function of time has reached a predetermined value;
   (b) the potential is brought to a potential (B) which is characteristic for the electrochemical reaction (C) of the substance;
   (c) the current thus produced (C') is measured; and
   (d) the measured value thus obtained and the measured value from the impedance measurement is correlated with the substance.

10. Method according to Claims 1 to 8, for the continuous detection of at least two substances in which:

    (a) at least two detection cycles (E) are performed, in which, per detection cycle (E)

       (a1) the enrichment (A) of at least one of the substances to be detected is ended when the electrode capacitance or the electrode capacitance as a function of time has reached a predetermined value; and optionally,
       (a2) after that, the potential is brought to a potential (B), which is characteristic for the electrochemical reaction (C) of at least one substance; as well as
       (a3) the current thus produced (C') is measured; and

    (b) then the measured values thus obtained and the measured values from the impedance measurement are correlated with the substances.

11. Method according to one of Claims 9 or 10, in which the potential characteristic for the electrochemical reaction (C) is changed linearly as a function of time.

12. Method according to one of Claims 9 to 11, in which the concentration of the substance is determined at a given potential through the current (C') produced during the electrochemical reaction (C).

13. Device for the continuous detection of at least one substance in a gaseous or liquid mixture, with the aid of a sensor electrode (4), with:

    (a) means for applying at the sensor electrode (4) a potential, characteristic for the enrichment (A) of the substance at the surface of the sensor electrode (4);
    (b) means for impedance measurement of the electrode capacitance of the sensor electrode (4) as a result of the enrichment (A);
    (c) means for the correlation of the measured value thus obtained with the substance, and
    (d) means for the removal (C, D) of the substance enriched on the surface of the sensor electrode (4).

14. Device according to Claim 13, with:

    (a) means for ending the enrichment (A), when the electrode capacitance or the change of electrode capacitance as a function of time has reached a predetermined value;
    (b) means for changing (B) the potential to a potential which is characteristic for the electrochemical reaction (C) of the substance;
    (c) means for the measurement of the current thus produced (C'); and
    (d) means for the correlation of the measured value thus obtained and the measured value from the impedance measurement with the substance.

**15.** Device according to Claims 13 or 14, with:

(a) a sensor (2), which consists of a membrane separating an electrolyte of the sensor (2) from the mixture and a sensor electrode (4) neighboring a membrane (6); and
(b) means for introducing the mixture to the side of the membrane away from the electrolyte (6).

**16.** Device according to one of Claims 13 to 15, in which a noble metal layer (8) is applied on one side of the membrane (6) of the sensor electrode (4).

**17.** Device according to Claim 16, in which the sensor electrode (4) has a roughness factor which is smaller in comparison to that of the conventional sensor electrodes.

**Revendications**

**1.** Procédé de détection en continu d'au moins une substance dans un mélange gazeux ou liquide au moyen d'une électrode de détection (4), dans lequel :

a) la substance est alimentée (A) sur la surface de l'électrode de détection, par application d'un potentiel d'adsorption caractéristique de la substance à détecter;
b) l'alimentation (A) est déterminée par mesure d'impédance de la capacité électrique de l'électrode de détection (4);
c) la valeur de mesure ainsi obtenue est corrélée à la substance;
d) la substance alimentée sur la surface de l'électrode de détection (4) est éliminée; et
e) les étapes a) à d) sont répétées.

**2.** Procédé selon la revendication 1, pour lequel la concentration de la substance est déterminée à partir de la différence entre la capacité électrique de l'électrode de détection (4), sans et avec une alimentation (A) en substance sur la surface de l'électrode.

**3.** Procédé selon la revendication 1, pour lequel la concentration de la substance est déterminée à partir de la variation temporelle de la capacité électrique de l'électrode de détection (4).

**4.** Procédé selon l'une des revendications précédentes, pour lequel l'alimentation (A) est achevée lorsque la capacité électrique mesurée ou la variation temporelle mesurée de la capacité électrique de l'électrode de détection atteint une valeur prédéterminée.

**5.** Procédé selon l'une des revendications précédentes, pour lequel la valeur de mesure ainsi obtenue est normalisée à une autre valeur de mesure, déterminée, le cas échéant, par une autre mesure de la capacité électrique de l'électrode de détection, valeur de mesure pour laquelle pratiquement ce n'est pas la substance à détecter qui est alimentée, mais l'alimentation étant seulement assurée par de l'oxygène ou de l'hydrogène sur l'électrode de détection (4).

**6.** Procédé selon l'une des revendications précédentes, pour lequel la substance à détecter est ensuite convertie par voie électrochimique sur l'électrode de détection (4) ou bien une autre électrode, avec application d'un potentiel, et le au moins un produit alors constitué est ensuite détectée par l'électrode de détection (4).

**7.** Procédé selon l'une des revendications précédentes, pour lequel, dans le but d'éliminer la substance fournie à la surface de l'électrode, le potentiel est porté (D) à un potentiel caractéristique de sa conversion électrochimique et/ou de sa désorption.

**8.** Procédé selon l'une des revendications précédentes, pour lequel la détection est optimisée par l'intermédiaire des paramètres que sont le matériau de l'électrode, la composition de l'électrode, le processus de l'alimentation (A), le potentiel d'alimentation, le potentiel de conversion électrochimique (C) et/ou la variation temporelle du potentiel pour la conversion électrochimique.

**9.** Procédé selon l'une des revendications précédentes, pour lequel:

a) l'alimentation est cessée lorsque la capacité électrique ou bien la variation temporelle de la capacité électrique de l'électrode atteint une valeur prédéterminée;
b) le potentiel est amené (B) à un potentiel caractéristique de la conversion électrochimique (C) de la substance;
c) le courant (C') alors créé est mesuré; et
d) la valeur de mesure ainsi obtenue et la valeur de mesure issue de la valeur d'impédance sont corrélées à la substance.

**10.** Procédé selon l'une des revendications 1 à 8 pour la détection continue d'au moins deux substances, pour lequel:

a) au moins deux cycles de détection (E) sont effectués, sachant que, par cycle de détection (E),

a1) l'alimentation (A) d'au moins une substance à détecter est cessée lorsque la capacité électrique ou la variation temporelle de la capacité électrique de l'électrode a atteint une valeur prédéterminée; et, le cas échéant,
a2) le potentiel est ensuite amené (B) à un potentiel caractéristique de la conversion électrochimique (C) d'au moins une substance;
et
a3) le courant (C') alors produit est mesuré; et

b) les valeurs de mesure ainsi obtenues et les valeurs de mesure issues de la mesure d'impédance sont ensuite corrélées envers les substances.

**11.** Procédé selon la revendication 9 ou 10, pour lequel le potentiel caractéristique de la conversion électrochimique (C) est soumis à une variationde nature lin éaire, en fonction du temps.

**12.** Procédé selon l'une des revendications 9 à 11, pour lequel la concentration de la substance est déterminée par l'intermédiaire du courant (C') produit, pour un potentiel déterminé, lors de la conversion électrochimique (C).

**13.** Dispositif de détection continue d'au moins une substance dans un mélange gazeux ou liquide, au moyen d'une électrode de détection (4) comportant :

a) des moyens pour appliquer à l'électrode de détection (4) un potentiel caractéristique de l'alimentation (A) en la substance sur la surface de l'électrode de détection (4),
b) des moyens de mesure d'impédance de la capacité électrique de l'électrode de détection (4), par suite du processus d'alimentation (A),
c) des moyens de mise en corrélation de la valeur de mesure ainsi obtenue envers la substance, et
d) des moyens d'élimination (C, D) de la substance fournie à la surface de l'électrode de détection (4).

**14.** Dispositif selon la revendication 13, comportant :

a) des moyens pour faire cesser l'alimentation (A), lorsque la capacité électrique ou la variation temporelle de la capacité électrique de l'électrode a atteint une valeur prédéterminée;
b) des moyens pour modifier le potentiel à un potentiel caractéristique de la conversion électrochimique (C) de la substance;
c) des moyens de mesure du courant (C') alors produit; et
d) des moyens de mise en corrélation, envers la substance, de la valeur de mesure ainsi obtenue et de la valeur de mesure issue de la mesure d'impédance.

**15.** Dispositif selon la revendication 13 ou 14, comportant:

a) un capteur (2) constitué d'une membrane (6) séparant un électrolyte du capteur (2) vis-à-vis du mélange et d'une électrode de détection (4) voisine de la membrane (6); et
b) des moyens d'alimentation en mélange à la face de membrane (6) opposée à l'électrolyte.

**16.** Dispositif selon l'une des revendications 13 à 15, pour lequel une couche de métal noble (8) est appliquée sur une face de la mambrane (6) de l'électrode de détection (4).

17. Dispositif selon la revendication 16, pour lequel l'électrode de détection (4) présente un facteur de rugosité faible par rapport à celui d'électrodes de détection classiques.

Fig. 1

Elektrolytlösung

8    Gas

Fig. 2

Fig. 3a

Fig. 3b

Fig. 4a

t / s

Fig. 4b

Fig. 5

Fig. 6a

Fig. 6b

Fig. 6c